# EUROPEAN PATENT APPLICATION

(11) **EP 4 730 884 A2**
(43) Date of publication of application: **22.04.2026**
(21) Application number: 26163043.8
(22) Date of filing: 12.01.2022
(51) Int. Cl.: H04W 64/00

(54) **WIRELESS COMMUNICATION METHOD AND DEVICE**

(30) Priority: 24.11.2021 WO PCT/CN2021/132931
(62) Divisional of application: 22896942.4
(71) Applicant: GUANGDONG OPPO MOBILE TELECOMMUNICATIONS CORP., LTD., Dongguan, Guangdong 523860 (CN)
(72) Inventor: LUO, Chaoming, Guangdong, 523860 (CN); HUANG, Lei, 049483 Singapore (SG)
(74) Representative: Wu, Ting

(57) **Abstract**

A wireless communication method and a device are provided. The method is applicable to the field of communication. In the method, a scheme for using a measurement setup is specified. Specifically, automatic termination of a measurement setup is realized by setting a timer, and a usage rule for a measurement setup identity (ID) is specified, which is possible to avoid conflict of measurement setup ID, thereby improving system performance.

## Description

### TECHNICAL FIELD

Embodiments of the disclosure relate to the field of communication, and more particularly, to a wireless communication method and a device.

### BACKGROUND

Wireless local area network (WLAN) sensing refers to a method and application for sensing human bodies or objects in an environment by measuring change of a WLAN signal caused by scattering and/or reflection of the WLAN signal by the human bodies or objects. Specifically, a measurement setup may be established between a sensing initiator and sensing responder(s) through a measurement setup procedure, and the measurement setup is identified by a measurement setup identity (ID). However, there is currently no related technical solution in the art regarding how to control or manage the measurement setup established between the sensing initiator and the sensing responder(s) after the measurement setup is established.

### SUMMARY

Embodiments of the disclosure provide a wireless communication method and a device, which can reduce signaling overhead and improve system performance in addition to realizing control of a measurement setup.

In a first aspect, a wireless communication method is provided in the disclosure. The method includes the following. First indication information is received, where the first indication information indicates a start time and/or a duration of a first timer corresponding to a first measurement setup, and the start time and the duration of the first timer are used for controlling the first measurement setup.

In a second aspect, a wireless communication method is provided in the disclosure. The method includes the following. First indication information is transmitted, wherein the first indication information indicates a start time and/or a duration of a first timer corresponding to a first measurement setup, and the start time and the duration of the first timer are used for controlling the first measurement setup.

In a third aspect, a first device is provided in the disclosure. The first device is configured to perform the method described above in the first aspect or various implementations of the first aspect. Specifically, the first device includes functional modules for performing the method in the first aspect or various implementations of the first aspect.

In an implementation, the first device may include a processing unit. The processing unit is configured to perform functions related to information processing. For example, the processing unit may be a processor.

In an implementation, the first device may include a transmitting unit and/or a receiving unit. The transmitting unit is configured to perform functions related to transmission. The receiving unit is configured to perform functions related to reception. For example, the transmitting unit may be a transmitter, and the receiving unit may be a receiver. For another example, the first device is a communication chip, the transmitting unit may be an input circuit or interface of the communication chip, and the transmitting unit may be an output circuit or interface of the communication chip.

In a fourth aspect, a second device is provided in the disclosure. The second device is configured to perform the method described above in the second aspect or various implementations of the second aspect. Specifically, the second device includes functional modules for performing the method in the second aspect or various implementations of the second aspect.

In an implementation, the second device may include a processing unit. The processing unit is configured to perform functions related to information processing. For example, the processing unit may be a processor.

In an implementation, the second device may include a transmitting unit and/or a receiving unit. The transmitting unit is configured to perform functions related to transmission. The receiving unit is configured to perform functions related to reception. For example, the transmitting unit may be a transmitter, and the receiving unit may be a receiver. For another example, the second device is a communication chip, the receiving unit may be an input circuit or interface of the communication chip, and the transmitting unit may be an output circuit or interface of the communication chip.

In a fifth aspect, a first device is provided in the disclosure. The first device includes a processor and a memory. The memory is configured to store computer programs. The processor is configured to invoke and execute the computer programs stored in the memory, so as to perform the method described above in the first aspect or various implementations of the first aspect.

In an implementation, the processor is one or more processors, and the memory is one or more memories.

In an implementation, the memory and the processor may be integrated together, or the memory is disposed separately from the processor.

In an implementation, the first device further includes a transmitter and a receiver.

In a sixth aspect, a second device is provided in the disclosure. The second device includes a processor and a memory. The memory is configured to store computer programs. The processor is configured to invoke and execute computer programs stored in the memory, so as to perform the method described above in the second aspect or various implementations of the second aspect.

In an implementation, the processor is one or more processors, and the memory is one or more memories.

In an implementation, the memory and the processor may be integrated together, or the memory is disposed separately from the processor.

In an implementation, the second device further includes a transmitter and a receiver.

In a seventh aspect, a chip is provided in the disclosure. The chip is configured to implement the method in any one of the first aspect to the second aspect or in various implementations thereof. Specifically, the chip includes a processor. The processor is configured to invoke and execute computer programs from a memory, to cause a device equipped with the chip to perform the method described above in any one of the foregoing first aspect or the second aspect or in various implementations thereof.

In an eighth aspect, a computer-readable storage medium is provided in the disclosure. The computer-readable storage medium configured to store computer programs which are operable with a computer to perform the method described above in any one of the first aspect or the second aspect or in various implementations thereof.

In a ninth aspect, a computer program product is provided in the disclosure. The computer program includes computer program instructions which are operable with a computer to perform the method in any one of the first aspect or the second aspect or in various implementations thereof.

In a tenth aspect, a computer program is provided in the disclosure. The computer program, when executed by a computer, is operable with the computer to perform the method in any one of the first aspect or the second aspect or in various implementations thereof.

Based on the above technical solutions, for the first measurement setup, the first timer may be introduced, and the start time and the duration of the first timer are designed to control the first measurement setup. As such, the first device or the second device can control the first measurement setup based on the start time and/or the duration of the first timer. For example, based on the start time and/or the duration of the first timer, the first device or the second device may control whether the first device terminates the first measurement setup. In addition, the second device transmits the first indication information indicating the start time and/or the duration of the first timer to the first device, which is possible to ensure that the first device and the second device have consistent understanding regarding a control result of the first measurement setup, thereby realizing control of the first measurement setup. That is, compared with a scheme of managing the first measurement setup through interaction between the first device and the second device, by adopting the solutions provided in the disclosure, it is possible to reduce signaling overhead and improve system performance in addition to realizing control of the first measurement setup.

### BRIEF DESCRIPTION OF THE DRAWINGS

FIG. 1 illustrates an example of a communication system architecture to which embodiments of the disclosure are applied.
FIG. 2 illustrates an example of a station(s) (STA) involved in sensing measurement provided in embodiments of the disclosure.
FIG. 3 is a schematic flowchart of a wireless communication method provided in embodiments of the disclosure.
FIG. 4 to FIG. 8 each illustrate an example of a measurement setup request frame provided in embodiments of the disclosure.
FIG. 9 illustrates an example of a measurement setup response frame provided in embodiments of the disclosure.
FIG. 10 and FIG. 11 each illustrate an example of starting or restarting a first timer provided in embodiments of the disclosure.
FIG. 12 is a schematic block diagram of a first device provided in embodiments of the disclosure.
FIG. 13 is a schematic block diagram of a second device provided in embodiments of the disclosure.
FIG. 14 is a schematic block diagram of a communication device provided in embodiments of the disclosure.
FIG. 15 is a schematic block diagram of a chip provided in embodiments of the disclosure.

### DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The technical solutions of the embodiments of the disclosure may be applied to various communication systems, for example, wireless local area network (WLAN), wireless fidelity (WiFi), or other communication systems. A frequency band supported by WLAN may include, but is not limited to, a low frequency band (2.4 Giga Hertz (GHz), 5 GHz, and 6 GHz), and a high frequency band (60 GHz).

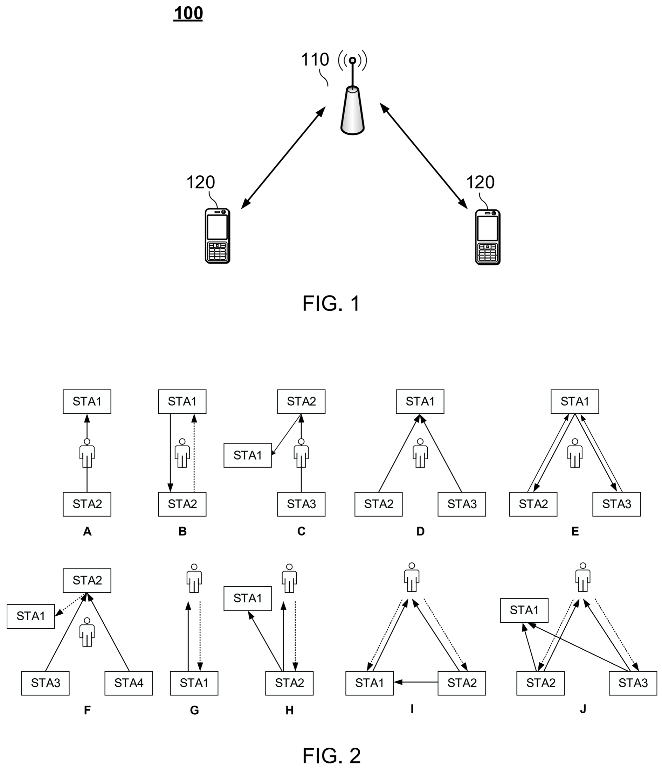

FIG. 1 illustrates an example of a communication system architecture to which embodiments of the disclosure are applied.

As illustrated in FIG. 1, the communication system 100 may include an access point (AP) 110, and a station (STA) 120 for accessing a network via the AP 110. In some scenarios, the AP 110 may be referred to as an AP STA, that is, the AP 110 is also a type of STA in some sense. In some scenarios, the STA 120 may be referred to as a non-AP STA. In some scenarios, the STA 120 may include an AP STA and a non-AP STA. Communication in the communication system 100 may include: communication between the AP 110 and the STA 120, communication between the STAs 120, or communication between the STA 120 and a peer STA, where the peer STA may refer to a device for communicating with a peer of the STA 120, for example, the peer STA may be an AP or a non-AP STA.

The AP 110 may be used as a bridge for connecting a wired network and a wireless network. The AP 110 is mainly used for connecting various wireless network clients together and then connecting the wireless network to an Ethernet. The AP 110 may be a terminal device (for example, a mobile phone) having a Wi-Fi chip or a network device (for example, a router).

It should be noted that, a role of the STA 120 in the communication system is not absolute, that is, the role of the STA 120 in the communication system may be switched between the AP and the STA. For example, in some scenarios, if a mobile phone is connected to a router, the mobile phone is an STA. If the mobile phone is a hotspot for another mobile phone, the mobile phone serves as an AP.

In some embodiments, the AP 110 and the STA 120 may be devices applied to vehicle to everything (V2X); internet of things (IoT) nodes, sensors, etc. in loT; smart cameras, smart remote controls, smart water meters and electricity meters, etc. in smart home; sensors in smart city, etc.

In some embodiments, the AP 110 may be a device that supports 802.11be standards. The AP 110 may also be a device that supports various current and future 802.11 WLAN standards, such as 802.11ax, 802.11ac, 802.11n, 802.11g, 802.11b, 802.11a, etc. In some embodiments, the STA 120 may support 802.11be standards. The STA may also support various current and future 802.11 WLAN standards, such as 802.11ax, 802.11ac, 802.11n, 802.11g, 802.11b, 802.11a, etc.

In some embodiments, the AP 110 and/or the STA 120 may be deployed on land, which includes indoor or outdoor, handheld, wearable, or in-vehicle. The AP 110 and/or the STA 120 may also be deployed on water (such as ships). The AP 110 and/or the STA 120 may also be deployed in the air (such as airplanes, balloons, satellites, etc.).

In some embodiments, the STA 120 may be a device supporting WLAN/Wi-Fi technology, such as a mobile phone, a tablet (pad), a computer with wireless transceiver functions, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, an in-vehicle communication device, a wireless communication chip/application specific integrated circuit (ASIC)/system-on-chip (SOC), etc.

Exemplarily, the STA 120 may also be a wearable device. The wearable device may also be called a wearable smart device, which is a generic term of wearable devices obtained through intelligent design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or some of functions of a smart phone, and for example, various types of smart bands and smart jewelries for physical monitoring, of which each is dedicated to application functions of a certain type and required to be used together with other devices such as a smart phone.

In some embodiments, the AP 110 and/or STA 120 may also be a wireless device. The wireless device supports multi-band communication, for example, communicates simultaneously on frequency bands of 2.4 GHz, 5 GHz, 6 GHz, and 60 GHz, or communicates simultaneously on different channels of the same frequency band (or different frequency bands), thereby improving communication throughput and/or reliability between devices. Such a device is generally referred to as a multi-band device, or referred to as a multi-link device (MLD), and is sometimes referred to as a multi-link entity or a multi-band entity. The MLD may be an AP or an STA.

For example, if the MLD is an AP, the MLD includes one or more APs. If the MLD is an STA, the MLD includes one or more non-AP STAs. An MLD including one or more APs may be referred to as an AP MLD, and an MLD including one or more non-AP STAs may be referred to as a non-AP MLD, where the non-AP MLD may be referred to as an STA MLD. In other words, the AP MLD may include multiple APs, and the non-AP MLD includes multiple STAs. Optionally, multiple links may be formed between an AP(s) in the AP MLD and an STA(s) in the non-AP MLD, and the AP in the AP MLD and the corresponding STA in the non-AP MLD may perform data communication over the corresponding link.

It should be understood that, FIG. 1 only illustrates an example of the disclosure and shall not be construed as limitation on the disclosure. For example, FIG. 1 only exemplarily illustrates one AP and two STAs. In some embodiments, the communication system 100 may include multiple APs and other quantities of STAs, and embodiments of the disclosure are not limited in this regard.

It should be understood that, a device having communication functions in a network/system in embodiments of the disclosure may be referred to as a communication device. Taking the communication system 100 illustrated in FIG. 1 as an example, the communication device may include the AP 110 and the STA 120 that have communication functions, where the AP 110 and the STA 120 may be the specific devices described above, and will not be described again herein. The communication device may further include other devices in the communication system 100, such as a network controller, a gateway, and other network entities, and embodiments of the disclosure are not limited in this regard.

It should be understood that, the terms "system" and "network" herein are usually used interchangeably throughout this disclosure. The term "and/or" herein only describes an association between associated objects, which means that there may be three relationships. For example, *A* and/or B may mean *A* alone, both *A* and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association. For example, A indicates *B* may mean that *A* directly indicates B, for instance, B may be obtained according to *A;* may mean that *A* indirectly indicates B, for instance, A indicates C, and B may be obtained according to C; or may mean that that there is an association between A and B.

Terms used in implementations of the disclosure are only intended for explaining embodiments of the disclosure, rather than limiting the disclosure. The terms "first", "second", "third", "fourth", and the like in the specification and claims of the disclosure, and the accompanying drawings are used to distinguish different objects, and are not necessarily used to describe a particular order. In addition, the terms "include", "comprise", and "have" as well as variations thereof are intended to cover non-exclusive inclusion.

In the elaboration of embodiments of the disclosure, the term "correspondence" may mean that there is a direct or indirect correspondence between the two, or may mean that there is an association between the two, or may mean a relationship of indicating and indicated or configuring and configured, etc.

In embodiments of the disclosure, the "pre-defined" or "pre-configured" may be implemented by pre-storing a corresponding code or table in a device (for example, including the STA and the network device) or in other manners that can be used for indicating related information, and the disclosure is not limited in this regard. For example, the "pre-defined" may mean defined in a protocol. Exemplarily, the "protocol" may refer to a communication standard protocol, and may include, for example, a Wi-Fi protocol and a related protocol applied to a future Wi-Fi communication system, and the disclosure is not limited in this regard.

In order to facilitate understanding of technical solutions of embodiments of the disclosure, related terms of the disclosure will be described below.

Association identifier (AID): used for identifying a terminal associated with an AP.

Medium access control (MAC): an abbreviation for MAC address.

Transmission opportunity (TXOP): refers to a period of time in which a terminal having the TXOP may initiate one or more transmissions.

Burst: generally refers to a short period of time in which one or more signals will be transmitted.

Burst group: refers to a group of one or more bursts, and bursts in the same burst group generally have some common features.

Sensing measurement is sensing of human bodies or objects in an environment by measuring change of a signal caused by scattering and/or reflection of the signal by the human bodies or objects. That is, sensing measurement is measurement and sensing of a surrounding environment by using a wireless signal, so that various functions can be realized, such as detection of whether there is intrusion, detection of movement, fall, etc. of a person in a room, gesture recognition, and building of a three-dimensional picture.

The device(s) participating in sensing measurement may have the following roles:
Sensing initiator: a device that initiates a sensing session and wants to obtain a sensing result, also referred to as a sensing session initiator.

Sensing responder: a non-initiator device that participates in a sensing session, also referred to as a sensing session responder.

Sensing transmitter: a device that transmits a sensing illumination signal, also referred to as a sensing signal transmitter.

Sensing receiver: a device that receives a sensing illumination signal, also referred to as a sensing signal receiver.

Sensing processor: a device that processes the sensing measurement result(s).

Sensing participant: includes the sensing initiator, the sensing transmitter(s), and the sensing receiver(s).

A device may have one or more roles in a sensing measurement. For example, a sensing initiator may be a sensing initiator only, or may also be a sensing transmitter, or may also be a sensing receiver, or may also be both a sensing transmitter and a sensing receiver. When establishing a sensing session, STAs may negotiate their respective sensing roles and operational parameters, or may announce their respective roles and operational parameters.

FIG. 2 illustrates an example of an STA(s) involved in sensing measurement provided in embodiments of the disclosure.

As illustrated in *A* in FIG. 2, STA1 may be a sensing initiator, or a sensing receiver, or a sensing processor; and STA2 may be a sensing transmitter. As illustrated in B in FIG. 2, STA1 may be a sensing initiator or a sensing transmitter, and STA2 may be a sensing receiver or a sensing processor. As illustrated in *C* in FIG. 2, STA1 may be a sensing initiator or a sensing processor, STA2 may be a sensing receiver, and STA3 may be a sensing transmitter. As illustrated in D in FIG. 2, STA1 may be a sensing initiator, or a sensing receiver, or a sensing processor; STA2 may be a sensing transmitter; and STA3 may be a sensing transmitter. As illustrated in E in FIG. 2, STA1 may be a sensing initiator, or a sensing transmitter, or a sensing processor; STA2 may be a sensing receiver; and STA3 may be a sensing receiver. As illustrated in F in FIG. 2, STA1 may be a sensing initiator, STA2 may be a sensing receiver or a sensing processor, STA3 may be a sensing transmitter, and STA4 may be a sensing transmitter. As illustrated in G in FIG. 2, STA1 may be a sensing initiator, or a sensing transmitter, or a sensing receiver, or a sensing processor. As illustrated in H in FIG. 2, STA1 may be a sensing initiator; and STA2 may be a sensing transmitter, or a sensing receiver, or a sensing processor. As illustrated in *I* in FIG. 2, STA1 may be a sensing initiator, or a sensing transmitter, or a sensing receiver, or a sensing processor; and STA2 may be a sensing transmitter or a sensing receiver. As illustrated in *J* in FIG. 2, STA1 may be a sensing initiator or a sensing processor, STA2 may be a sensing transmitter or a sensing receiver, and STA3 may be a sensing transmitter or a sensing receiver. It should be noted that, FIG. 2 is only an example of the disclosure, and shall not be understood as limitation on the disclosure. For example, STA1, STA2, and STA3 in FIG. 2 only represent the roles of STAs, but are not intended to limit the quantity of STAs in FIG. 2 and in subsequent steps such as sensing session, measurement, etc. For example, the roles represented by STA1, STA2, and STA3 may be implemented as one or more STAs.

In some embodiments, there may be multiple sensing types.

For example, for a channel state information (CSI)-based sensing type, i. e. CSI-based sensing, a sensing measurement result is obtained by processing CSI of a received sensing illumination signal. For another example, for a sensing type based on echo signal, i. e. radar-based sensing, a sensing measurement result is obtained by processing a received echo signal of a sensing illumination signal.

In some embodiments, a sensing session initiator can set multiple sets of measurement parameters through a measurement setup procedure. A measurement setup may include a set of measurement parameters, and may be identified by a measurement setup identity (ID). The measurement setup may be applied to multiple measurements, where each measurement may be considered as one measurement instance, and the measurement instance may be identified by a measurement instance ID.

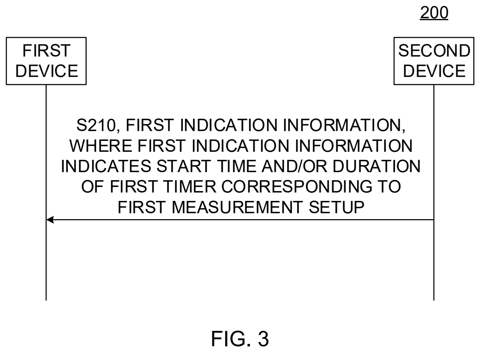

FIG. 3 is a schematic flowchart of a wireless communication method 200 provided in embodiments of the disclosure. The method 200 may be performed interactively by a first device and a second device. For example, the first device may be a sensing responder, and the second device may be a sensing initiator. Optionally, the second device is an AP, which may act as a sensing initiator to initiate sensing measurement as a proxy of other devices.

As illustrated in FIG. 3, the method 200 may include the following.

S210, a first device receives first indication information transmitted by a second device, where the first indication information indicates a start time and/or a duration of a first timer corresponding to a first measurement setup, and the start time and the duration of the first timer are used for controlling the first measurement setup.

In the embodiments, for the first measurement setup, the first timer may be introduced, and the start time and the duration of the first timer are designed to control the first measurement setup. As such, the first device or the second device can control the first measurement setup based on the start time and/or the duration of the first timer. For example, based on the start time and/or the duration of the first timer, the first device or the second device may control whether the first device terminates the first measurement setup. In addition, the second device transmits the first indication information indicating the start time and/or the duration of the first timer to the first device, which is possible to ensure that the first device and the second device have consistent understanding regarding a control result of the first measurement setup, thereby realizing control of the first measurement setup. That is, compared with a scheme of managing the first measurement setup through interaction between the first device and the second device, by adopting the solutions provided in the disclosure, it is possible to reduce signaling overhead and improve system performance in addition to realizing control of the first measurement setup.

Exemplarily, based on whether the first timer expires, the first device may control whether to terminate the first measurement setup.

Exemplarily, based on whether the first timer expires, the second device may control whether to terminate the first measurement setup with the first device.

Exemplarily, the first indication information only indicates the start time of the first timer, and the duration of the first timer is pre-defined.

Exemplarily, the first indication information only indicates the duration of the first timer, and the start time of the first timer is pre-defined.

Exemplarily, the first indication information indicates the start time and the duration of the first timer.

It should be noted that, in embodiments of the disclosure, the "pre-defined" may be implemented by pre-storing a corresponding code or table in a device (for example, including a terminal device and a network device) or in other manners that can be used for indicating related information, and the implementation thereof is not limited in the disclosure. For example, the "pre-defined" may mean defined in a protocol. Optionally, the "protocol" may refer to a communication standard protocol, which may include, for example, a WIFI-related protocol, and the disclosure is not limited in this regard.

In some embodiments, expiration of the first timer is used for triggering the first device to terminate the first measurement setup, where the expiration the first timer includes: a duration for which no measurement instance initiated by the second device is received by the first device is longer than or equal to the duration of the first timer.

As an exemplary application scenario, the second device terminates measurement abnormally due to objective reasons. For example, when establishing the first measurement setup, the second device expects that the second device can initiate measurement consistently. However, after a period of time, the second device no longer initiates measurement due to exiting of a user program. In this case, the first device may terminate the first measurement setup automatically if the duration for which no measurement instance initiated by the second device is received by the first device is longer than or equal to the duration of the first timer, which means that the second device does not have to transmit a sensing setup termination frame, thereby reducing system load.

In some embodiments, expiration of the first timer is used for triggering the second device to terminate the first measurement setup with the first device, where the expiration of the first timer includes: a duration for which the first device does not participate in a measurement instance initiated by the second device is longer than or equal to the duration of the first timer.

As an exemplary application scenario, the first device does not have capability of participating in measurement due to objective reasons. For example, when establishing the first measurement setup, the first device expects that the first device can participate in measurement consistently. However, after a period of time, the first device no longer participates in measurement due to low power. In this case, the second device may terminate the first measurement setup with the first device automatically if the duration for which the first device does not participate in the measurement instance initiated by the second device is longer than or equal to the duration of the first timer, which means that the first device does not have to transmit a sensing setup termination request frame, thereby reducing system load.

In some embodiments, the method 200 may further include the following. Start the first timer at the start time, and terminate the first measurement setup if the first timer expires.

As an example, the first device starts the first timer at the start time, and then the first timer is running. If the duration for which no measurement instance initiated by the second device is received by the first device is longer than or equal to the duration of the first timer, the first device terminates the first measurement setup. As another example, the second device starts the first timer at the start time, and then the first timer is running. If the duration for which the first device does not participate in the measurement instance initiated by the second device is longer than or equal to the duration of the first timer, the second device terminates the first measurement setup with the first device.

In some embodiments, the method 200 may further include the following. At a start time or an end time of receiving or transmitting a measurement instance, restart the first timer if the first timer is running and has not expired.

As an example, at a start time or an end time of receiving the measurement instance, the first device restarts the first timer if the first timer is running and the duration for which no measurement instance initiated by the second device is received by the first device is shorter than the duration of the first timer. As another example, at a start time or an end time of transmitting the measurement instance, the second device restarts the first timer if the first timer is running and the duration for which the first device does not participate in the measurement instance initiated by the second device is shorter than the duration of the first timer.

In some embodiments, the method 200 may further include the following. At a start time or an end time of receiving or transmitting a 1^{st} frame of the measurement instance, restart the first timer if the first timer is running and has not expired.

In other words, the start time or the end time of receiving or transmitting the measurement instance may be the start time or the end time of receiving or transmitting the 1^{st} frame of the measurement instance.

As an example, at a start time or an end time of receiving the 1^{st} frame of the measurement instance, the first device restarts the first timer if the first timer is running and the duration for which no measurement instance initiated by the second device is received by the first device is shorter than the duration of the first timer. As another example, at a start time or an end time of transmitting the 1^{st} frame of the measurement instance, the second device restarts the first timer if the first timer is running and the duration for which the first device does not participate in the measurement instance initiated by the second device is shorter than the duration of the first timer.

In other alternative embodiments, the start time or the end time of receiving or transmitting the measurement instance may also be a start time or an end time of receiving or transmitting a specific frame or signal of the measurement instance, and the disclosure is not limited in this regard. For example, at a start time or an end time of receiving a sensing signal of the measurement instance, the first device restarts the first timer if the first timer is running and has not expired. For another example, at a start time or an end time of transmitting the sensing signal of the measurement instance, the second device restarts the first timer if the first timer is running and has not expired.

In some embodiments, S210 may include the following. Receive the first indication information during establishment of the first measurement setup.

Exemplarily, during establishment of the first measurement setup between the first device and the second device, the first device receives the first indication information transmitted by the second device.

In some embodiments, the first measurement setup is used for periodic sensing measurement, and S210 may include the following. A first measurement setup request frame is received, where the first measurement setup request frame contains scheduling information for a measurement instance, and the scheduling information includes the first indication information.

Exemplarily, the first device receives the first measurement setup request frame transmitted by the second device, where the first measurement setup request frame contains the scheduling information for the measurement instance, where the scheduling information carries the first indication information. That is, the first indication information involved in the disclosure may be used as the scheduling information for the measurement instance.

Exemplarily, the scheduling information may be carried in a first subfield in a first field of the first measurement setup request frame.

Exemplarily, the scheduling information may be carried in multiple bits in a first sub-field in a first field of the first measurement setup request frame.

Exemplarily, the first field includes, but is not limited to, an action field. The first subfield includes, but is not limited to, a sensing parameter subfield.

In some embodiments, the scheduling information further includes at least one of: a start time of a 1^{st} measurement instance, a first time interval between two consecutive measurement instances, the number of measurement instances corresponding to the first time interval, or a second time interval between two consecutive measurement instances, where a duration of the first time interval is shorter than a duration of the second time interval.

Exemplarily, the first device receives the first measurement setup request frame transmitted by the second device, where the first measurement setup request frame contains the scheduling information, and the scheduling information may include the first indication information and at least one of the following: the start time of the 1^{st} measurement instance, the first time interval between two consecutive measurement instances, the number of measurement instances corresponding to the first time interval, or the second time interval between two consecutive measurement instances, where the duration of the first time interval is shorter than the duration of the second time interval.

As an example, the first time interval, the number of measurement instances corresponding to the first time interval, and the second time interval may not be set. For example, the 1^{st} measurement instance is started at 9:00 am, and then one measurement instance may be started every 1 second by default, and thus such starting of measurement instance is performed consecutively.

As another example, the first time interval, the number of measurement instances corresponding to the first time interval, and the second time interval may be set. For example, the 1^{st} measurement instance is started at 9:00 am, and then one measurement instance is started every 1 second and such starting of measurement instance is performed 3600 times consecutively. Then after an interval of 2 hours, one measurement instance is started every 1 second and such starting of measurement instance is performed 3600 times consecutively, and then after an interval of 2 hours, one measurement instance is started every 1 second and such starting of measurement instance is performed 3600 times, and so forth.

In other alternative embodiments, the first measurement setup request frame may further contain other information, and the disclosure is not limited in this regard.

In some embodiments, the method 200 may further include the following. A second measurement setup request frame is received, where the second measurement setup request frame is used for requesting establishment of a second measurement setup, and the second measurement setup is used for immediate sensing measurement.

Exemplarily, the first device may establish the second measurement setup based on the received second measurement setup request frame, and perform immediate sensing based on the second measurement setup.

In some embodiments, the second measurement setup request frame does not contain scheduling information for a measurement instance. Alternatively, the second measurement setup request frame contains second indication information, where the second indication information indicates a start time and/or a duration of a second timer corresponding to the second measurement setup.

As an example, the second measurement setup request frame does not contain the scheduling information for a measurement instance, where the scheduling information carries the second indication information. As another example, the second measurement setup request frame contains the scheduling information for a measurement instance, where the scheduling information carries the second indication information. That is, with regard to immediate sensing measurement, the second measurement setup request frame used for establishing the measurement setup may not contain the second indication information, or may contain the second indication information, and the disclosure is not limited in this regard.

In some embodiments, the start time and the duration of the second timer are used for controlling the second measurement setup.

In some embodiments, expiration of the second timer is used for triggering the second device to terminate the second measurement setup with the first device, where the expiration the second timer includes: a duration for which the first device does not participate in a measurement instance initiated by the second device is longer than or equal to the duration of the second timer.

In some embodiments, expiration of the second timer is used for triggering the first device to terminate the second measurement setup, where the expiration of the second timer includes: a duration for which no measurement instance initiated by the second device is received by the first device is longer than or equal to the duration of the second timer.

It should be understood that, regarding the scheme for controlling the second measurement setup based on the start time and the duration of the second timer, reference can be made to the scheme for controlling the first measurement setup based on the start time and the duration of the first timer. Similarly, regarding the design of the second timer, reference can be made to the design of the first timer. Details thereof will not be described again herein to avoid repetition.

In some embodiments, the start time of the first timer is a time after an establishment time of the first measurement setup.

Exemplarily, the first device starts the first timer at the time after the establishment time of the first measurement setup.

In some embodiments, the start time of the first timer is a time of a 1^{st} measurement instance that the second device plans to initiate after the establishment time, and the first indication information indicates the time of the 1^{st} measurement instance.

Exemplarily, the first indication information indicates the time of the 1^{st} measurement instance that the second device plans to initiate after the establishment time, and the first device starts the first timer at the time of the 1^{st} measurement instance. That is, no matter whether the 1^{st} measurement instance is received by the first device at the time of the 1^{st} measurement instance, the first device starts the first timer at the time of the 1^{st} measurement instance.

In other alternative embodiments, the first device may also start the first timer at a time at which the 1^{st} measurement instance is actually received, and the disclosure is not limited in this regard.

In some embodiments, there is a first offset between the start time of the first timer and the establishment time, and the first indication information indicates the first offset.

Exemplarily, the establishment time is earlier than the start time of the first timer, and there is the first offset between the establishment time and the start time of the first timer. In other words, the start time of the first timer is later than the establishment time, and there is the first offset between the establishment time and the start time of the first timer.

Exemplarily, the first indication information indicates that there is the first offset relative to the establishment time, and the first device starts the first timer at a time that is later than the establishment time by the first offset. That is, no matter whether the first device has received a measurement instance before the time of the 1^{st} measurement instance, the first device starts the first timer at the time that is later than the establishment time by the first offset.

As an example, the first offset is an offset between the establishment time and the time of the 1^{st} measurement instance, that is, the start time of the first timer is the time of the 1^{st} measurement instance. As another example, the first offset is 0, that is, the start time of the first timer is the establishment time.

In some embodiments, there is a second offset between the start time of the first timer and the time of the 1^{st} measurement instance that the second device plans to initiate after the establishment time, and the first indication information indicates the second offset.

Exemplarily, the start time of the first timer is earlier than the time of the 1^{st} measurement instance, and there is the second offset between the time of the 1^{st} measurement instance and the start time of the first timer. In other words, the time of the 1^{st} measurement instance is later than the start time of the first timer, and there is the second offset between the time of the 1^{st} measurement instance and the start time of the first timer.

Exemplarily, the first indication information indicates that there is the second offset relative to the time of the 1^{st} measurement instance that the second device plans to initiate after the establishment time, and the first device starts the first timer at a time that is earlier than the time of the 1^{st} measurement instance by the second offset. That is, no matter whether the first device has received a measurement instance before the time of the 1^{st} measurement instance, the first device starts the first timer at the time that is earlier than the time of the 1^{st} measurement instance by the second offset.

As an example, the second offset is 0, that is, the start time of the first timer is the time of the 1^{st} measurement instance. As another example, the second offset is an offset between the establishment time and the 1^{st} measurement instance, that is, the start time of the first timer is the establishment time.

In some embodiments, the start time of the first timer is the establishment time of the first measurement setup.

Exemplarily, the first indication information indicates the duration of the first timer but does not indicate the start time of the first timer, and the first device starts the first timer at the establishment time.

In some embodiments, the establishment time is a start time or an end time of receiving by the first device the first measurement setup request frame used for establishing the first measurement setup.

In other alternative embodiments, the establishment time may also be other times. For example, the establishment time may also be any time between the start time and the end time of receiving by the first device the first measurement setup request frame used for establishing the first measurement setup, and the disclosure is not limited in this regard. For another example, the establishment time may be a start time or an end time of a measurement setup response frame, or any time between the start time and the end time of the measurement setup response frame.

In some embodiments, a duration between the start time of the first timer and the 1^{st} measurement instance is shorter than the duration of the first timer.

In the embodiments, the duration between the start time of the first timer and the 1^{st} measurement instance is designed to be shorter than the duration of the first timer, such that the first timer will not expire at the time of the 1^{st} measurement instance, that is, the first measurement setup will not be terminated. In this way, it is possible to ensure that the 1^{st} measurement instance can be received normally by the first device after the first timer is started, thereby ensuring measurement performance.

Exemplarily, if the duration between the establishment time of the first measurement setup and the 1^{st} measurement instance is longer than or equal to the duration of the first timer, the start time of the first timer is a time after the establishment time of the first measurement setup.

Exemplarily, if the duration between the establishment time of the first measurement setup and the 1^{st} measurement instance is shorter than the duration of the first timer, the start time of the first timer is a time after the establishment time of the first measurement setup, or the start time of the first timer is the establishment time of the first measurement setup. For example, if the duration between the start time of the first timer and the 1^{st} measurement instance is shorter than the duration of the first timer, the start time of the first timer may be any one of: the establishment time, the time of the 1^{st} measurement instance, or any time between the establishment time and the 1^{st} measurement instance.

In some embodiments, a duration between two adjacent measurement instances after the establishment time is shorter than the duration of the first timer.

In the embodiments, a duration between the establishment time and the 1^{st} measurement instance that the second device plans to initiate after the establishment time is designed to be shorter than the duration of the first timer. As such, after the first timer is restarted at a time at which a measurement instance is received or transmitted, the first timer will not expire at a time at which a next measurement instance is initiated by the second device. That is, it is possible to ensure that the next measurement instance can be received by the first device, thereby ensuring measurement performance.

In some embodiments, the method 200 may further include: after termination of the first measurement setup, establish another measurement setup by using an ID different from at least one ID, where the at least one ID includes a measurement setup ID used for a measurement instance that the second device participates in.

Exemplarily, after the first device and/or the second device terminates the first measurement setup, the second device is not supposed to use an ID of the first measurement setup for a measurement instance that the first device participates in. However, the second device may use the ID of the first measurement setup for a measurement instance that another device(s) participates in, and the disclosure is not limited in this regard.

Exemplarily, when the second device is establishing another measurement setup with the first device, if a measurement setup(s) corresponding to the at least one ID is still in use by other devices, that is, if there is still at least one measurement instance for which the at least one ID is in use or is to be used, an ID of the another measurement setup can only be used for establishing the measurement setup that is still in use, the first device will be involved in a measurement instance of a measurement setup corresponding to the at least one ID.

It should be noted that, in general, a measurement setup may be established between the first device and the second device through a measurement setup procedure. However, since a measurement setup is identified by a measurement setup ID, after termination of a measurement setup, the measurement setup ID corresponding to the measurement setup is likely to be used again for establishing a new measurement setup, and in this case, measurement setup conflict is likely to occur.

For example, a sensing initiator has established a measurement setup with a first sensing responder, where a measurement setup ID of the measurement setup is 1. The sensing initiator has also established another measurement setup with a second sensing responder, where a measurement setup ID of the measurement setup is also 1. The measurement setup established by the sensing initiator with the first sensing responder and the measurement setup established by the sensing initiator with the second sensing responder are both applied to the same sensing application, such as gesture recognition. After a period of time, the sensor initiator terminates the measurement setup with the first responder, and after another period of time, the sensing initiator establishes another measurement setup with the first sensing responder, where the another measurement setup is applied to gait recognition, and a measurement setup ID of the another measurement setup is still set to 1. In this case, the sensing initiator is likely to obtain both a measurement result from the first sensing responder and a measurement result from the second sensing responder and it is unable to distinguish these measurement results, and as a result, neither gesture recognition nor gait recognition can be completed.

In the embodiments, after the first measurement setup is terminated, when establishing another measurement setup, the first device establishes the measurement setup by using an ID different from the measurement setup ID used for the measurement instance that the second device participates in, that is, when establishing another measurement setup, the ID of the measurement setup is distinguished from the measurement setup ID used for the measurement instance that the second device participates in. In this way, it is possible to avoid conflict between the ID of the measurement setup and the measurement setup ID used for the measurement instance that the second device participates in, thereby improving reliability of sensing measurement.

In some embodiments, the method 200 may further include the following. After termination of the first measurement setup, a measurement setup identified by a first ID among the at least one ID is established by using the first ID, where the at least one ID includes a measurement setup ID used for a measurement instance that the second device participates in.

Exemplarily, after the first device and/or the second device terminates the first measurement setup, the first device and/or the second device may re-establish the first measurement setup by using the ID of the first measurement setup.

In some embodiments, the at least one ID includes the ID of the first measurement setup.

In some embodiments, a sensing session established between the first device and the second device includes multiple measurement setups, the multiple measurement setups correspond to multiple timers, and a third timer is a timer having the maximum duration among the multiple timers, where a start time and a duration of the third timer are used for controlling the sensing session.

Exemplarily, based on whether the third timer expires, the first device may control whether to terminate the sensing session established between the first device and the second device, where the third timer has the maximum duration among the multiple timers, and the multiple timers correspond to multiple different measurement setups between the first device and the second device. Alternatively, the multiple timers have the same duration, and the duration of the third timer is the same as a duration of any one of the multiple timers. When terminating the sensing session, the first device terminates all established measurement setups in the sensing session by default.

Exemplarily, based on whether the third timer expires, the second device may control whether to terminate the sensing session established between the first device and the second device, where the third timer has the maximum duration among the multiple timers, and the multiple timers correspond to multiple different measurement setups between the first device and the second device. Alternatively, the multiple timers have the same duration, and the duration of the third timer is the same as a duration of any one of the multiple timers. In this case, the third timer may be any one of the multiple timers. When terminating the sensing session, the second device terminates all established measurement setups in the sensing session by default.

In some embodiments, the multiple measurement setups include a measurement setup for periodic sensing measurement and/or a measurement setup for immediate sensing measurement.

Exemplarily, the multiple measurement setups each is a measurement setup for periodic sensing measurement. With reference to the first measurement setup described above, the multiple measurement setups may be multiple first measurement setups. Accordingly, the multiple timers are multiple first timers, and the third timer is a timer with the maximum duration among the multiple first timers.

Exemplarily, the multiple measurement setups each is a measurement setup for immediate sensing measurement. With reference to the second measurement setup described above, the multiple measurement setups are multiple second measurement setups. Accordingly, the multiple timers are multiple second timers, and the third timer is a timer with the maximum duration among the multiple second timers.

Exemplarily, the multiple measurement setups include a measurement setup(s) for periodic sensing measurement and a measurement setup(s) for immediate sensing measurement. With reference to the first measurement setup described above and the second measurement setup described above, the multiple measurement setups include at least one first measurement setup and at least one second measurement setup. Accordingly, the multiple timers include at least one first timer and at least one second timer, and the third timer is a timer with the maximum duration among the at least one first timer and the at least one second timer.

In some embodiments, expiration of the third timer is used for triggering the first device to terminate the sensing session with the second device, and the expiration of the third timer includes: a duration for which no measurement instance initiated by the second device is received by the first device is longer than or equal to the duration of the third timer.

As an exemplary application scenario, the first device and the second device did not implement an association procedure, that is, for the second device, the first device is an unassociated STA. The second device terminates the sensing session abnormally due to objective reasons. For example, when establishing the multiple measurement setups, the first device expects that the first device can receive measurement initiated by the second device. However, after a period of time, the first device leaves a communication range of the second device, and then the first device may terminate the sensing session with the second device automatically if the duration for which no measurement instance initiated by the second device is received by the first device is longer than or equal to the duration of the third timer. This is because the second device does not know a time at which the first device leaves the communication range of the second device, and as a result, the second device will not instruct the first device to terminate the sensing session. In the embodiments, by adopting the third timer, the first device can release promptly the sensing session and storage and computing resources associated with a measurement setup in the sensing session, thereby reducing system load.

In some embodiments, expiration of the third timer is used for triggering the second device to terminate the sensing session with the first device, and the expiration of the third timer includes: a duration for which the first device does not participate in a measurement instance initiated by the second device is longer than or equal to the duration of the third timer.

As an exemplary application scenario, the first device and the second device did not implement an association procedure, that is, for the second device, the first device is an unassociated STA. The first device does not have capability of participating in measurement due to objective reasons. For example, when establishing the multiple measurement setups, the first device expects that the first device can participate in measurement consistently. However, after a period of time, the first device leaves a communication range of the second device, and then the second device may terminate the sensing session with the first device automatically if the duration for which the first device does not participate in the measurement instance initiated by the second device is longer than or equal to the duration of the third timer. This is because the first device is likely to have no opportunity to transmit a sensing setup termination request frame if the first device leaves the communication range of the second device, and as a result, the second device is unable to know a time at which the first device leaves the communication range of the second device. In the embodiments, by adopting the third timer, the second device can release promptly the sensing session and storage and computing resources associated with a measurement setup in the sensing session, thereby reducing system load.

It should be understood that, regarding the scheme for controlling the sensing session based on the start time and the duration of the third timer, reference can be made to the scheme for controlling the first measurement setup based on the start time and the duration of the first timer. Details thereof will not be described again herein to avoid repetition.

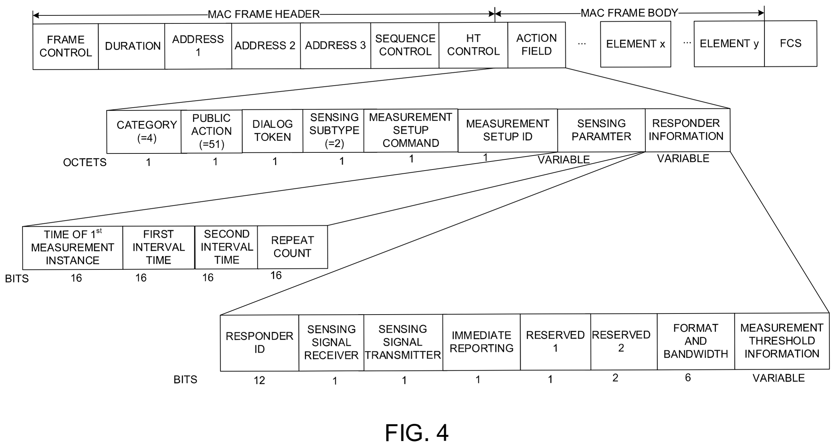

The measurement setup request frame in the disclosure will be described below with reference to FIG. 4 to FIG. 8. It should be understood that, the measurement setup request frame illustrated in each of FIG. 4 to FIG. 8 may be the first measurement setup request frame described above, or may be the second measurement setup request frame described above, and the disclosure is not limited in this regard.

FIG. 4 illustrates an example of the measurement setup request frame provided in embodiments of the disclosure.

As illustrated in FIG. 4, the measurement setup request frame may include a MAC frame header and a MAC frame body. The MAC frame header and the MAC frame body each may include multiple fields. The multiple fields in the MAC frame body include an action field. The action field includes a sensing parameter subfield. The sensing parameter subfield contains the time of the 1^{st} measurement instance, the first time interval, the second time interval, and a repeat count. With reference to the first measurement setup request frame described above, the sensing parameter subfield may be used for carrying the scheduling information described above, where the scheduling information includes the first indication information, the first time interval, the second time interval, and the repeat count, and the first indication information indicates the time of the 1^{st} measurement instance.

It should be understood that, if the measurement setup request frame includes the action field, the measurement setup request frame may also be referred to as a sensing action frame, an action frame, or an Action No Ack frame.

Subfields in the action field will be exemplified below.

Category subfield: 4 indicates that the frame is a public action frame.

Public action subfield: 51 indicates that the frame is a sensing action frame. Any value within a range of 46-255 may indicate that the frame is a sensing action frame.

Sensing subtype subfield: 0 indicates a sensing by proxy request frame; 1 indicates a sensing by proxy response frame; 2 indicates a sensing measurement setup request frame; 3 indicates a sensing measurement setup response frame; 4 indicates a sensing measurement setup termination frame; 5 indicates a sensing measurement setup termination request frame; 6 indicates a sensing measurement setup suspend frame; 7 indicates a sensing measurement setup resume request frame; 8 indicates a sensing measurement setup resume response frame; and 9~15 are reserved. The above values of this subfield are only exemplary, and the subfield may also be set to other values as long as it is ensured that a value corresponding to each sensing subtype is different from a value corresponding to any other sensing subtype. For example, the value 2 may indicate a sensing setup request frame, and the value 1 may indicate a sensing setup response frame. For another example, the value 8 may indicate a sensing setup request frame, and the value 15 may indicate a sensing setup response frame, etc.

Measurement setup command subfield: 0 indicates demand; 1 indicates suggest; and 2~255 are reserved. The above values of this subfield are only exemplary, and the subfield may also be set to other values as long as it is ensured that a value corresponding to each command is different from a value corresponding to any other command. For example, the value 2 may indicate demand, and the value 1 may indicate suggest. For another example, the value 8 may indicate demand, and the value 15 may indicate suggest, etc.

Sensing parameter subfield: used for carrying scheduling information for a measurement instance.

Responder information subfield: indicates information of a peer device (namely, the sensing responder or the second device in the disclosure).

Information carried in the sensing parameter subfield will be exemplified below.

The time of the 1^{st} measurement instance: may also be referred to as a start time. For example, a start time of the 1^{st} measurement instance may be set to a partial timing synchronization function (TSF) value of a target time or an offset value between the target time and a current time. A TSF may represent a timing synchronization function. A partial TSF may represent truncated data of a synchronized time value, for example, from the 64 TSF timer bits, remove the most significant 38 bits and the least significant 10 bits.

The first time interval: may also be referred to as a small period between measurement instances or a small time interval between two consecutive measurement instances. As an example, the first time interval may be in a unit of 100 milliseconds (ms), for example, the value 0 is a reserved value, 1 indicates 100 ms, 2 indicates 200 ms, and so forth. As another example, the first interval may be in a unit of 1 ms, for example, the value 0 is a reserved value, 1 indicates 1 ms, 2 indicates 2 ms, 3 indicates 4 ms, 4 indicates 8 ms, 5 indicates 16 ms, 6 indicates 32 ms, 7 indicates 64 ms, 8 indicates 128 ms, and so forth. The above values are only exemplary, and the first time interval may also be set to other values as long as it is ensured that a value corresponding to each time interval is different from a value corresponding to any other time interval. For example, the first interval may be in a unit of 100 ms, for example, 0 indicates 100 ms, 1 indicates 200 ms, and so forth.

The second time interval: may also be referred to as a big period between measurement instances or a big time interval between two consecutive measurement instances. As an example, the second time interval may be in a unit of 1 minute, for example, the value 0 is a reserved value, 1 indicates 1 minute, 2 indicates 2 minutes, 3 indicates 4 minutes, 4 indicates 8 minutes, 5 indicates 16 minutes, 6 indicates 32 minutes, 7 indicates 64 minutes, 8 indicates 128 minutes, and so forth. The above values of this subfield are only exemplary, and the subfield may also be set to other values as long as it is ensured that a value corresponding to each time interval is different from a value corresponding to any other time interval. For example, 0 indicates 1 minute, 1 indicates 2 minutes, 2 indicates 4 minutes, 3 indicates 8 minutes, and so forth.

Repeat count bit: the number of consecutive measurement instances corresponding to the small period.

Information contained in the responder information subfield will be exemplified below.

Responder ID: indicates an ID of the second device (i. e. responder). For an associated STA, the responder ID is an AID, and for an unassociated STA, the responder ID is an unassociation ID (UID), where the UID is an ID allocated by an AP, and the allocation space of the UID is consistent with the allocation space of the AID. 0 indicates an AID of the associated AP.

Sensing signal receiver: indicates whether the second device (i. e. responder) participates in measurement as a sensing signal receiver. In an embodiment, if this subfield is set to 1, it indicates yes; otherwise, the subfield is set to 0. In another embodiment, if the subfield is set to 0, it indicates yes; otherwise, the subfield is set to 1.

Sensing signal transmitter: indicates whether the second device participates in measurement as a sensing signal transmitter. In an embodiment, if this subfield is set to 1, it indicates yes; otherwise, the subfield is set to 0. In another embodiment, if the subfield is set to 0, it indicates yes; otherwise, the subfield is set to 1.

Immediate reporting: indicates whether a measurement result needs to be immediately reported if the second device participates in measurement as a sensing signal receiver. This subfield is a reserved subfield if the second device participates in measurement as a sensing signal transmitter.

Format and bandwidth: indicates information of a physical protocol data unit (PPDU) format and bandwidth used for sensing measurement. A bit value of the format and bandwidth will be exemplified below with reference to Table 1.

**Table 1**

| Bit value of format and bandwidth | PPDU format | Bandwidth (MHz) |
|---|---|---|
| 1 | VHT | 20 |
| 2 | VHT | 40 |
| 3 | VHT | 80 |
| 4 | VHT | 80+80 |
| 5 | VHT | 160 |
| 6 | HE | 20 |
| 7 | HE | 40 |
| 8 | HE | 80 |
| 9 | HE | 80+80 |
| 10 | HE | 160 |
| 11 | EHT | 20 |
| 12 | EHT | 40 |
| 13 | EHT | 80 |
| 14 | EHT | 80+80 |
| 15 | EHT | 160 |
| 16 | EHT | 160+160 |
| 17 | EHT | 320 |

As shown in Table 1, for example, assuming that the bit value of the format and bandwidth is 1, it indicates that the PPDU format is very high throughput (VHT), and the bandwidth is 20 megahertz (MHz). For another example, assuming that the bit value of the format and bandwidth is 6, it indicates that the PPDU format is high efficiency (HE), and the bandwidth is 20 MHz. For another example, assuming that the bit value of the format and bandwidth is 11, it indicates that the PPDU format is extremely high throughput (EHT), and the bandwidth is 20 MHz.

Measurement threshold information: threshold-based measurement setup information.

It should be understood that, FIG. 4 is merely an example of the disclosure and shall not be construed as limitation on the disclosure. For example, in other alternative embodiments, the sensing parameter subfield may contain only some of the start time of the 1^{st} measurement instance, the first time interval, the second time interval, and the repeat count.

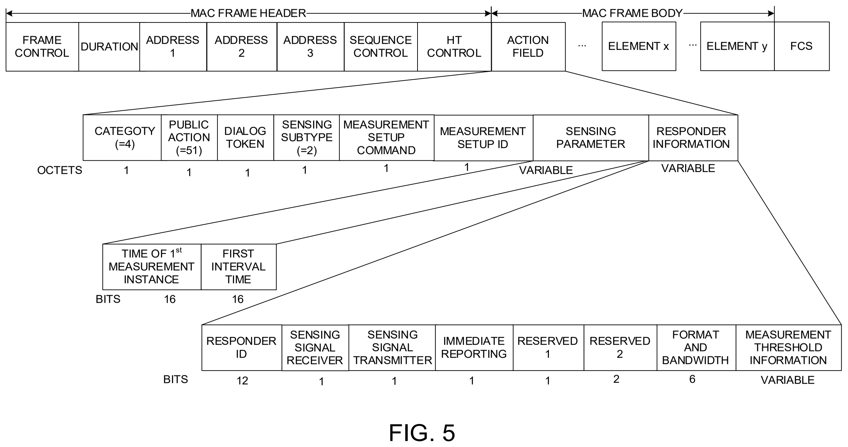

FIG. 5 to FIG. 8 each illustrate an example of a modified measurement setup request frame of the first measurement setup request frame illustrated in FIG. 4.

As illustrated in FIG. 5, the sensing parameter subfield only contains the time of the 1^{st} measurement instance and the first time interval.

With reference to the first measurement setup request frame described above, the sensing parameter subfield may be used for carrying the scheduling information described above, where the scheduling information includes the first indication information and the first time interval, and the first indication information indicates the time of the 1^{st} measurement instance. In this case, the time of the 1^{st} measurement instance may be used as the start time of the first timer, and the duration of the first timer may be predefined.

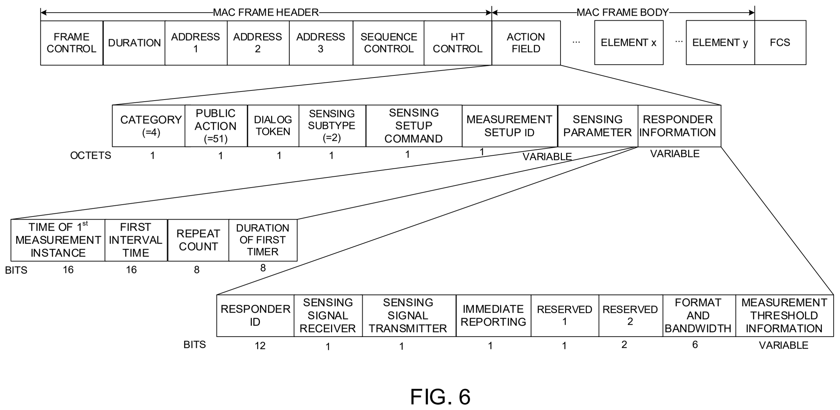

As illustrated in FIG. 6, the sensing parameter subfield contains only the time of the 1^{st} measurement instance, the first time interval, the repeat count, and the duration of the first timer.

As an example, the duration of the first timer may be in a unit of 100 ms, for example, the value 0 is a reserved value, 1 indicates 100 ms, 2 indicates 200 ms, and so forth. As another example, the duration of the first timer may be in a unit of 1 ms, for example, the value 0 is a reserved value, 1 indicates 1 ms, 2 indicates 2 ms, 3 indicates 4 ms, 4 indicates 8 ms, 5 indicates 16 ms, 6 indicates 32 ms, 7 indicates 64 ms, 8 indicates 128 ms, and so forth. The above values are only exemplary, and the duration of the first timer may also be set to other values as long as it is ensured that a value corresponding to each duration is different from a value corresponding to any other duration. For example, the duration of the first timer may be in a unit of 100 ms, 1 indicates 100 ms, 2 indicates 200 ms, and so forth.

With reference to the first measurement setup request frame described above, the sensing parameter subfield may be used for carrying the scheduling information described above, where the scheduling information includes the first indication information, the repeat count, and the first time interval, and the first indication information indicates the time of the 1^{st} measurement instance and the duration of the first timer. In this case, the time of the 1^{st} measurement instance may be used as the start time of the first timer.

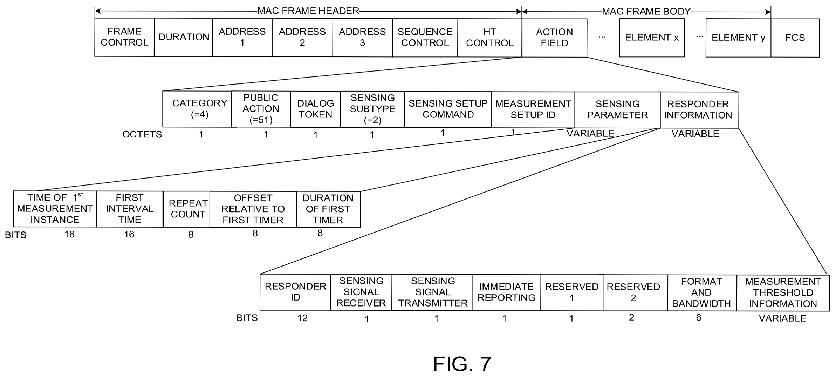

As illustrated in FIG. 7, the sensing parameter subfield contains only the time of the 1^{st} measurement instance, the first time interval, the repeat count, an offset relative to the first timer, and the duration of the first timer. The offset relative to the first timer may be the first offset described above, or may be the second offset described above. The duration of the first timer may also be referred to as an expiration time or a timer expiration time.

As an example, the offset relative to the first timer may be in a unit of 100 ms, for example, the value 0 is a reserved value, 1 indicates 100 ms, 2 indicates 200 ms, and so forth. As another example, the offset relative to the first timer may be in a unit of 1 ms, for example, the value 0 is a reserved value, 1 indicates 1 ms, 2 indicates 2 ms, 3 indicates 4 ms, 4 indicates 8 ms, 5 indicates 16 ms, 6 indicates 32 ms, 7 indicates 64 ms, 8 indicates 128 ms, and so forth. The above values are only exemplary, and the offset may also be set to other values as long as it is ensured that a value corresponding to each duration is different from a value corresponding to any other duration. For example, the offset relative to the first timer may be in a unit of 100 ms, 1 indicates 100 ms, 2 indicates 200 ms, and so forth.

With reference to the first measurement setup request frame described above, the sensing parameter subfield may be used for carrying the scheduling information described above, where the scheduling information includes the first indication information, the repeat count, and the first time interval, and the first indication information indicates the time of the 1^{st} measurement instance, the offset relative to the first timer, and the duration of the first timer. Optionally, the offset relative to the first timer may be used for determining the start time of the first timer, that is, the first offset or the second offset may be used for determining the start time of the first timer.

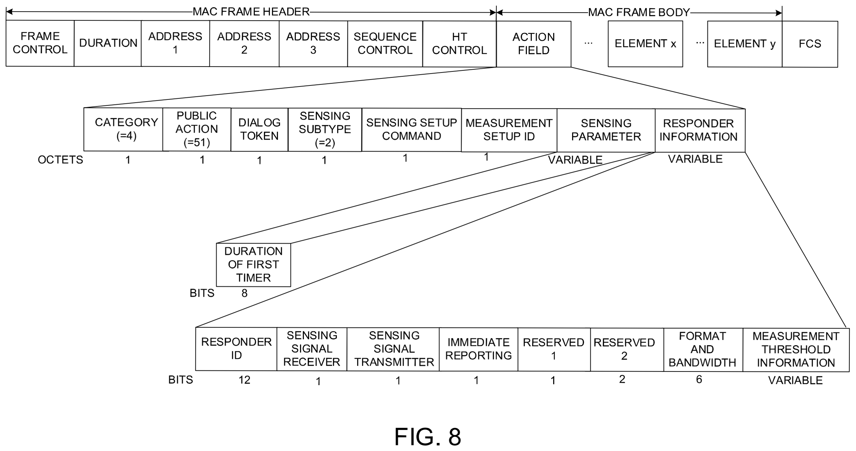

As illustrated in FIG. 8, the sensing parameter subfield contains only the duration of the first timer.

With reference to the first measurement setup request frame described above, the sensing parameter subfield may be used for carrying the scheduling information described above, where the scheduling information includes only the first indication information, and the first indication information indicates the duration of the first timer. Optionally, the start time of the first timer may be predefined. For example, the start time of the first timer may be the establishment time of the first measurement setup.

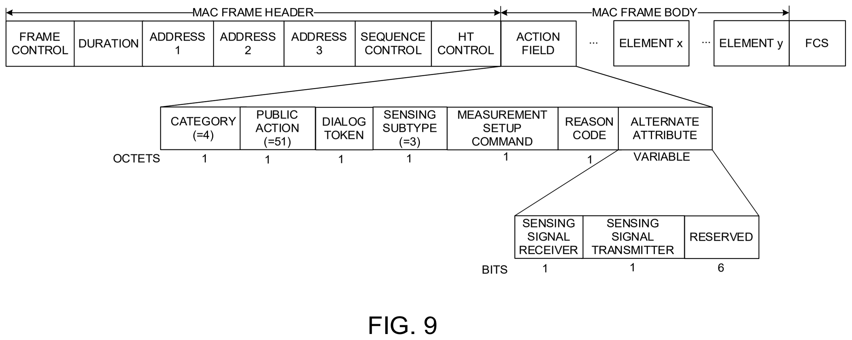

FIG. 9 illustrates an example of a measurement setup response frame provided in embodiments of the disclosure.

As illustrated in FIG. 9, the measurement setup response frame may include a MAC frame header and a MAC frame body. The MAC frame header and the MAC frame body each may include multiple fields. The multiple fields in the MAC frame body include an action field. The action field includes multiple subfields. The multiple subfields include multiple bits that may be used for carrying information.

Subfields in the action field will be exemplified below.

Sensing subtype subfield: 3 indicates a measurement setup response frame. Any value within a range of 0-255 may also indicate a measurement setup response frame.

Measurement setup command subfield: 0 indicates accept; 1 indicates reject; 2 indicates alternate; and 3-255 are reserved. The above values of this subfield are only exemplary, and the subfield may also be set to other values as long as it is ensured that a value corresponding to each command is different from a value corresponding to any other command. For example, the value 2 may indicate reject, and the value 1 may indicate accept. For another example, the value 8 may indicate accept, and the value 15 may indicate reject, etc.

Reason code subfield: if the value of the measurement setup command indicates reject, this subfield exists; otherwise, the subfield does not exist. 0 indicates that a measurement type indicated in a measurement setup request is not supported; 1 indicates that the format and bandwidth indicated in the measurement setup request is not supported; 2 indicates that threshold information indicated in the measurement setup request is not supported; and 3-255 are reserved. The above values of this subfield are only exemplary, and the subfield may also be set to other values as long as it is ensured that a value corresponding to each reason code is different from a value of corresponding to any other reason code.

Alternate attribute subfield: if the value of the measurement setup command indicates alternate, this subfield exists; otherwise, the subfield does not exist. The subfield indicates that the second device will use parameters different from those set in a request frame, which includes whether the second device is to act as a sensing signal transmitter and whether the second device is to act as a sensing signal receiver.

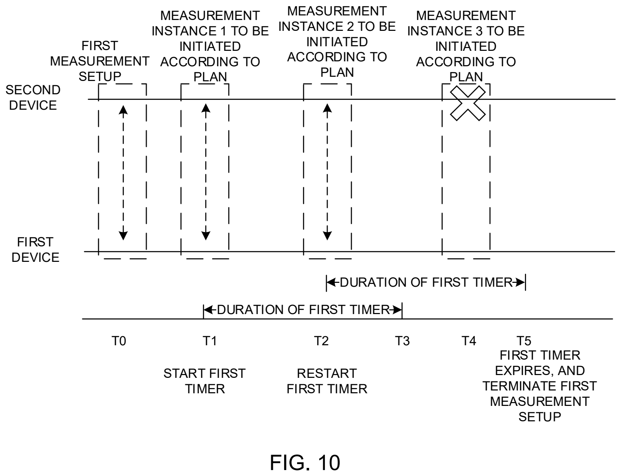

The implementation of starting or restarting the first timer in the disclosure will be exemplified below with reference to FIG. 10 to FIG. 11.

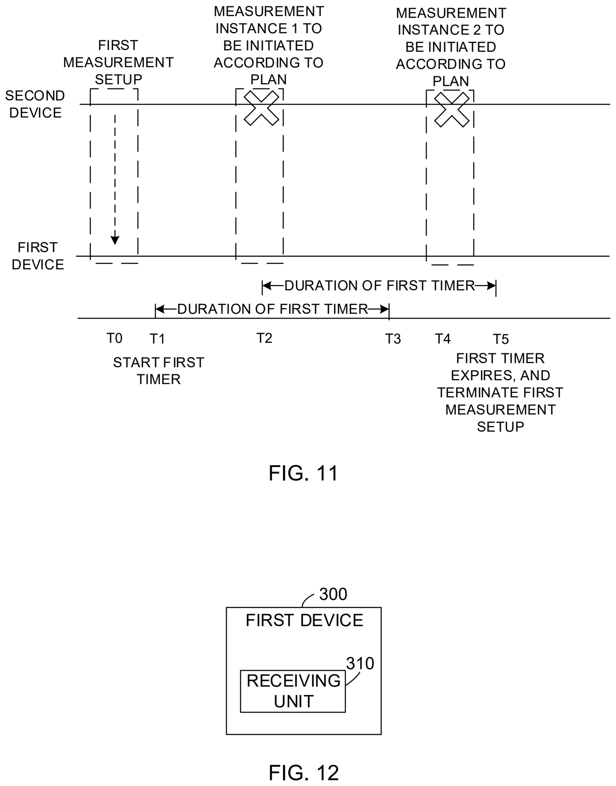

FIG. 10 and FIG. 11 each illustrate an example of starting or restarting the first timer provided in embodiments of the disclosure.

As illustrated in FIG. 10, it is assumed that the start time of the first timer corresponding to the first measurement setup is the time of the 1^{st} measurement instance that the second device plans to initiate after the establishment time of the first measurement setup, and the first indication information indicates the time of the 1^{st} measurement instance. The establishment time is denoted as time T0, the time of the 1^{st} measurement instance is denoted as time T1, a time of a 2^{nd} measurement instance is denoted as time T2, and the duration of the first timer is denoted as T. A difference between time T1 and time T0 is less than T, and a difference between time T2 and time T1 is less than T.

During measurement, the first device or the second device initiates the 1^{st} measurement instance at time T1, and accordingly, the first device or the second device starts the first timer at time T1. The second device initiates the 2^{nd} measurement instance at time T2, and at this time, the first device or the second device restarts the first timer. At any time (for example, time T4) between time T2 and time T5, since the second device fails to initiate a 3^{rd} measurement instance according to plan, the first measurement setup is terminated automatically at time T5 at which the first timer expires.

It should be understood that, FIG. 10 only illustrates an example of the disclosure, and shall not be construed as limitation on the disclosure.

For example, in other alternative embodiments, if the start time of the first timer is the time of the 1^{st} measurement instance, the disclosure may be applied to a case where the second device fails to initiate the 1^{st} measurement instance, or may be applied to a case where the second device initiates the 1^{st} measurement instance normally.

For another example, if the start time of the first timer is the time of the 1^{st} measurement instance, a duration between the establishment time of the first measurement setup and the 1^{st} measurement instance may be longer than or equal to the duration of the first timer, or may be shorter than the duration of the first timer.

As an exemplary application scenario, an AP acting as the second device establishes a measurement setup, the second device plans that the 1^{st} measurement instance will be initiated soon (the difference between time T1 and time T0 is less than T), and therefore, time T1 may be used as the start time of the first timer. During measurement, no matter whether the second device has actually initiated the 1^{st} measurement instance, the first timer may be started at the time of the 1^{st} measurement instance. Further, the measurement setup may be terminated automatically according to the status of reception (or transmission) of a measurement instance and the duration of the first timer, which means that the first device does not have to transmit a sensing setup termination request frame (that is, the first timer is maintained by the second device) or the second device does not have to transmit a sensing setup termination frame (that is, the first timer is maintained by the first device), thereby reducing system load.

As another exemplary application scenario, an AP acting as the second device establishes a measurement setup, and the second device plans that the 1^{st} measurement instance will be initiated after a period of time (the difference between T1 and T0 may be greater than or equal to T). For example, the AP as the second device may also need to establish another measurement setup with another device during time T0 ~ time T2, and therefore, time T1 may be used as the start time of the first timer. During measurement, no matter whether the second device has actually initiated the 1^{st} measurement instance, the first timer may be started at the time of the 1^{st} measurement instance. Further, the measurement setup may be terminated automatically according to the status of reception (or transmission) of a measurement instance and the duration of the first timer, which means that the first device does not have to transmit a sensing setup termination request frame (that is, the first timer is maintained by the second device) or the second device does not have to transmit a sensing setup termination frame (that is, the first timer is maintained by the first device), thereby reducing system load.

FIG. 11 illustrates another example of starting or restarting the first timer provided in embodiments of the disclosure.

As illustrated in FIG. 11, it is assumed that the start time of the first timer corresponding to the first measurement setup is any time between the establishment time of the first measurement setup and the time of the 1^{st} measurement instance that the second device plans to initiate after the establishment time. The establishment time is denoted as time T0, the time of the 1^{st} measurement instance is denoted as time T2, a time of a 2^{nd} measurement instance is denoted as time T4, the start time of the first timer is any time between time T0 and time T2 and is denoted as time T1, and the duration of the first timer is denoted as T. A difference between time T2 and time T0 is less than T, and a difference between time T4 and time T2 is also less than T.

During measurement, the first device or the second device starts the first timer at time T1, and the second device fails to initiate the 1^{st} measurement instance at time T2 between time T1 and time T3 according to plan. Accordingly, the first device or the second device starts the first timer at time T2. Further, the first timer expires at time T5, and at this time, the first device or the second device terminates the first measurement setup automatically.

It should be understood that, FIG. 11 only illustrates an example of the disclosure, and shall not be construed as limitation on the disclosure.

For example, in other alternative embodiments, if the start time of the first timer is any time between the establishment time of the first measurement setup and the time of the 1^{st} measurement instance that the second device plans to initiate after the establishment time, the disclosure may be applied to a case where the second device fails to initiate the 1^{st} measurement instance, or may be applied to a case where the second device initiates the 1^{st} measurement instance normally.

For another example, at any time between the establishment time of the first measurement setup and the time of the 1^{st} measurement instance that the second device plans to initiate after the establishment time, as long as it is ensured that a duration between the start time of the first timer and the 1^{st} measurement instance is shorter than the duration of the first timer, a duration between the establishment time of the first measurement setup and the 1^{st} measurement instance may be longer than or equal to the duration of the first timer, or may be shorter than the duration of the first timer, and the disclosure is not limited in this regard.

For another example, the start time of the first timer may also be the establishment time of the first measurement setup.

As an exemplary application scenario, an AP acting as the second device establishes a measurement setup, the second device plans that the 1^{st} measurement instance will be initiated soon (the difference between time T2 and time T0 is less than T), and therefore, time T1 (or time T0) between time T0 and time T2 is used as the start time of the first timer. During measurement, the first timer is started at time T1 (or at time T0 or time T2), and the first timer may be restarted at the time of the 1^{st} measurement instance no matter whether the second device has actually initiated the 1^{st} measurement instance. Further, the measurement setup may be terminated automatically according to the status of reception (or transmission) of a measurement instance and the duration of the first timer, which means that the first device does not have to transmit a sensing setup termination request frame (that is, the first timer is maintained by the second device) or the second device does not have to transmit a sensing setup termination frame (that is, the first timer is maintained by the first device), thereby reducing system load.

As another exemplary application scenario, an AP acting as the second device establishes a measurement setup, and the second device plans that the 1^{st} measurement instance will be initiated after a period of time (the difference between T2 and T0 may be greater than or equal to T). For example, the AP, namely the second device, may also need to establish another measurement setup with another device during time T0 ~ time T2, and therefore, time T1 (or time T2) may be used as the start time of the first timer, where a difference between time T2 and time T1 is less than T. During measurement, the first timer is started at time T1 (or at time T0 or time T2), and the first timer may be restarted at the time of the 1^{st} measurement instance no matter whether the second device has actually initiated the 1^{st} measurement instance. Further, the measurement setup may be terminated automatically according to the status of reception (or transmission) of a measurement instance and the duration of the first timer, which means that the first device does not have to transmit a sensing setup termination request frame (that is, the first timer is maintained by the second device) or the second device does not have to transmit a sensing setup termination frame (that is, the first timer is maintained by the first device), thereby reducing system load.

In some embodiments, termination of the first measurement setup does not affect a measurement setup between the first device and another device, and/or termination of the first measurement setup does not affect a measurement setup between the second device and another device, and/or termination the first measurement setup does not affect another measurement setup established between the first device and the second device.

Exemplarily, if the first device and/or the second device terminates the first measurement setup, neither the measurement setup between the first device and another device nor the measurement setup between the second device and another devices will be affected, no matter whether the ID of the measurement setup is the same as or different from the ID of the first measurement setup.

In some embodiments, the method 200 may further include the following. Before termination of the first measurement setup, maintain a storage resource and a computing resource associated with the first measurement setup.

Exemplarily, before the first device and/or the second device terminates the first measurement setup, the first device and/or the second device needs to maintain the first measurement setup to be available, that is, maintain the storage resource and the computing resource associated with the first measurement setup to be available.

In some embodiments, the method 200 may further include the following. After termination of the first measurement setup, release the storage resource and the computing resource associated with the first measurement setup.

Exemplarily, after the first device and/or the second device terminates the first measurement setup, the first device and/or the second device needs to release the storage resource and the computing resource promptly, so as to avoid affecting establishment of other measurement setups.

In some embodiments, the method 200 may further include the following. After termination of the first measurement setup, stop reporting a measurement result associated with the first measurement setup.

Exemplarily, after the first device and/or the second device terminates the first measurement setup, the first device is not supposed to report the measurement result associated with the first measurement setup. Accordingly, the second device is supposed to ignore the measurement result associated with the first measurement setup reported by the first device.

In some embodiments, the method 200 may further include the following. After termination of the first measurement setup, stop responding to a request frame associated with the first measurement setup from the second device.

Exemplarily, after the first device and/or the second device terminates the first measurement setup, the first device is not supposed to respond to the request frame associated with the first measurement setup from the second device.

In some embodiments, the request frame includes at least one of: a polling trigger frame, a measurement trigger frame, or a null data PPDU announcement (NDPA) frame.

Preferable implementations of the disclosure have been described in detail above with reference to the accompanying drawings. However, the disclosure is not limited to the details described in the foregoing implementations. Within the scope of the technical concept of the disclosure, various simple modifications can be made to the technical solutions of the disclosure, and these simple modifications all falls within the protection scope of the disclosure. For example, various technical features described in the foregoing implementations may be combined in any suitable manner without contradiction, and in order to avoid unnecessary redundancy, various possible combinations are not further described in the disclosure. For another example, various implementations of the disclosure may also be combined in any manner, and as long as the combinations do not depart from the idea of the disclosure, they should also be considered as contents disclosed in the disclosure.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation to the implementation of embodiments of the disclosure. In addition, in embodiments of the disclosure, the term "and/or" herein only describes an association between associated objects, which means that there can be three relationships. Specifically, A and/or B can mean A alone, both A and B exist, and B alone. Besides, the character "/" herein generally indicates that the associated objects are in an "or" relationship.

The method embodiments of the disclosure are described in detail above with reference to FIG. 3 to FIG. 11, and the apparatus embodiments of the disclosure will be described in detail below with reference to FIG. 12 to FIG. 15.

FIG 12 is a schematic block diagram of a first device 300 according to embodiments of the disclosure.

As illustrated in FIG. 12, the first device 300 may include a receiving unit 310. The receiving unit 310 is configured to receive first indication information, where the first indication information indicates a start time and/or a duration of a first timer corresponding to a first measurement setup, and the start time and the duration of the first timer are used for controlling the first measurement setup.

In some embodiments, expiration of the first timer is used for triggering a second device to terminate the first measurement setup with the first device, and the expiration of the first timer includes: a duration for which the first device does not participate in a measurement instance initiated by the second device is longer than or equal to the duration of the first timer.

In some embodiments, expiration of the first timer is used for triggering the first device to terminate the first measurement setup, and the expiration of the first timer includes: a duration for which no measurement instance initiated by a second device is received by the first device is longer than or equal to the duration of the first timer.

In some embodiments, the receiving unit 310 may be further configured to: start the first timer at the start time, and terminate the first measurement setup if the first timer expires.

In some embodiments, the receiving unit 310 may be specifically configured to: at a start time or an end time of receiving a measurement instance, restart the first timer if the first timer is running and has not expired.

In some embodiments, the receiving unit 310 may be specifically configured to: at a start time or an end time of receiving a 1^{st} frame of the measurement instance, restart the first timer if the first timer is running and has not expired.

In some embodiments, the receiving unit 310 may be specifically configured to: receive the first indication information during establishment of the first measurement setup.

In some embodiments, the first measurement setup is used for periodic sensing measurement, and the receiving unit 310 may be specifically configured to: receive a first measurement setup request frame, where the first measurement setup request frame contains scheduling information for a measurement instance, and the scheduling information includes the first indication information.

In some embodiments, the scheduling information further includes at least one of: a start time of a 1^{st} measurement instance, a first time interval between two consecutive measurement instances, the number of measurement instances corresponding to the first time interval, or a second time interval between two consecutive measurement instances, where a duration of the first time interval is shorter than a duration of the second time interval.

In some embodiments, the receiving unit 310 may be further configured to: receive a second measurement setup request frame, where the second measurement setup request frame is used for requesting establishment of a second measurement setup, and the second measurement setup is used for immediate sensing measurement.

In some embodiments, the second measurement setup request frame does not contain scheduling information for a measurement instance; or the second measurement setup request frame contains second indication information, where the second indication information indicates a start time and/or a duration of a second timer corresponding to the second measurement setup.

In some embodiments, the start time of the first timer is a time after an establishment time of the first measurement setup.

In some embodiments, the start time of the first timer is a time of a 1^{st} measurement instance that the second device plans to initiate after the establishment time, and the first indication information indicates the time of the 1^{st} measurement instance.

In some embodiments, there is a first offset between the start time of the first timer and the establishment time, and the first indication information indicates the first offset.

In some embodiments, there is a second offset between the start time of the first timer and a time of a 1^{st} measurement instance that the second device plans to initiate after the establishment time, and the first indication information indicates the second offset.

In some embodiments, the start time of the first timer is the establishment time of the first measurement setup.

In some embodiments, the establishment time is a start time or an end time of receiving by the first device the first measurement setup request frame used for establishing the first measurement setup.

In some embodiments, a duration between the start time of the first timer and the 1^{st} measurement instance is shorter than the duration of the first timer.

In some embodiments, a duration between two adjacent measurement instances after the establishment time of the first measurement setup is shorter than the duration of the first timer.

In some embodiments, the receiving unit 310 may be further configured to: after termination of the first measurement setup, establish another measurement setup by using an ID different from at least one ID, where the at least one ID includes a measurement setup ID used for a measurement instance that the second device participates in.

In some embodiments, the receiving unit 310 may be further configured to: after termination of the first measurement setup, establish a measurement setup identified by a first ID among the at least one ID by using the first ID, where the at least one ID includes a measurement setup ID used for a measurement instance that the second device participates in.

In some embodiments, the at least one ID includes an ID of the first measurement setup.

In some embodiments, a sensing session established between the first device and the second device includes multiple measurement setups, the multiple measurement setups correspond to multiple timers, and a third timer is a timer having the maximum duration among the multiple timers, where a start time and a duration of the third timer are used for controlling the sensing session.

In some embodiments, the multiple measurement setups include a measurement setup for periodic sensing measurement and/or a measurement setup for immediate sensing measurement.

It should be understood that, apparatus embodiments and method embodiments correspond to each other. For similar elaborations, reference can be made to the method embodiments. Specifically, the first device 300 illustrated in FIG. 12 may correspond to a corresponding entity for implementing the method 200 in embodiments of the disclosure, and the above and other operations and/or functions of various units of the first device 300 are respectively intended for implementing corresponding operations in the method illustrated in FIG. 3, which will not be elaborated again herein for the sake of brevity.

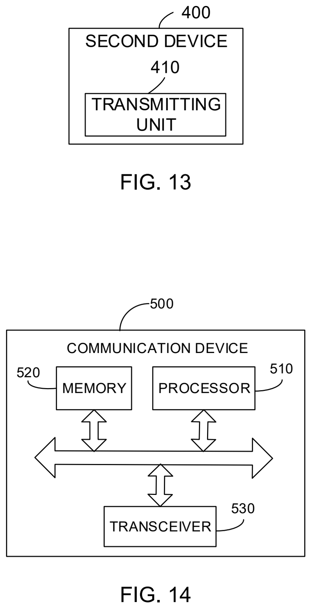

FIG. 13 is a schematic block diagram of a second device 400 according to embodiments of the disclosure.

As illustrated in FIG. 13, the second device 400 may include a transmitting unit 410. The transmitting unit 410 is configured to transmit first indication information, where the first indication information indicates a start time and/or a duration of a first timer corresponding to a first measurement setup, and the start time and the duration of the first timer are used for controlling the first measurement setup.

In some embodiments, expiration of the first timer is used for triggering the second device to terminate the first measurement setup with a first device, and the expiration of the first timer includes: a duration for which the first device does not participate in a measurement instance initiated by the second device is longer than or equal to the duration of the first timer.

In some embodiments, expiration of the first timer is used for triggering a first device to terminate the first measurement setup, and the expiration of the first timer includes: a duration for which no measurement instance initiated by the second device is received by the first device is longer than or equal to the duration of the first timer.

In some embodiments, the transmitting unit 410 may be further configured to: start the first timer at the start time, and terminate the first measurement setup if the first timer expires.

In some embodiments, the transmitting unit 410 may be specifically configured to: at a start time or an end time of transmitting a measurement instance, restart the first timer if the first timer is running and has not expired.

In some embodiments, the transmitting unit 410 may be specifically configured to: at a start time or an end time of transmitting a 1^{st} frame of the measurement instance, restart the first timer if the first timer is running and has not expired.

In some embodiments, the transmitting unit 410 may be specifically configured to: transmit the first indication information during establishment of the first measurement setup.

In some embodiments, the first measurement setup is used for periodic sensing measurement, and the transmitting unit 410 may be specifically configured to: transmit a first measurement setup request frame, where the first measurement setup request frame contains scheduling information for a measurement instance, and the scheduling information includes the first indication information.

In some embodiments, the scheduling information further includes at least one of: a start time of a 1^{st} measurement instance, a first time interval between two consecutive measurement instances, the number of measurement instances corresponding to the first time interval, or a second time interval between two consecutive measurement instances, where a duration of the first interval is shorter than a duration of of the second interval.

In some embodiments, the transmitting unit 410 may be further configured to: transmit a second measurement setup request frame, where the second measurement setup request frame is used for requesting establishment of a second measurement setup, and the second measurement setup is used for immediate sensing measurement.

In some embodiments, the second measurement setup request frame does not contain scheduling information for a measurement instance; or the second measurement setup request frame contain second indication information, where the second indication information indicates the start time and/or the duration of a second timer corresponding to the second measurement setup.

In some embodiments, the start time of the first timer is a time after an establishment time of the first measurement setup.

In some embodiments, the start time of the first timer is a time of a 1^{st} measurement instance that the second device plans to initiate after the establishment time, and the first indication information indicates the time of the 1^{st} measurement instance.

In some embodiments, there is a first offset between the start time of the first timer and the establishment time, and the first indication information indicates the first offset.

In some embodiments, there is a second offset between the start time of the first timer and a time of a 1^{st} measurement instance that the second device plans to initiate after the establishment time, and the first indication information indicates the second offset.

In some embodiments, the start time of the first timer is the establishment time of the first measurement setup.

In some embodiments, the establishment time is a start time or an end time of transmitting by the second device the first measurement setup request frame used for establishing the first measurement setup.

In some embodiments, a duration between the start time of the first timer and the 1^{st} measurement instance is shorter than the duration of the first timer.

In some embodiments, a duration between two adjacent measurement instances after the establishment time of the first measurement setup is shorter than the duration of the first timer.

In some embodiments, the transmitting unit 410 may be further configured to: after termination of the first measurement setup, establish another measurement setup by using an ID different from at least one ID, where the at least one ID includes a measurement setup ID used for a measurement instance that the second device participates in.

In some embodiments, the transmitting unit 410 may be further configured to: after termination of the first measurement setup, establish a measurement setup identified by a first ID among the at least one ID by using the first ID, where the at least one ID includes a measurement setup ID used for a measurement instance that the second device participates in.

In some embodiments, the at least one ID includes an ID of the first measurement setup.

In some embodiments, a sensing session established between the first device and the second device include multiple measurement setups, the multiple measurement setups correspond to multiple timers, and a third timer is a timer having the maximum duration among the multiple timers, where a start time and a duration of the third timer are used for controlling the sensing session.

In some embodiments, the multiple measurement setups include a measurement setup for periodic sensing measurement and/or a measurement setup for immediate sensing measurement.

It should be understood that, apparatus embodiments and method embodiments correspond to each other. For similar elaborations, reference can be made to the method embodiments. Specifically, the second device 400 illustrated in FIG. 13 may correspond to a corresponding entity for implementing the method 200 in embodiments of the disclosure, and the above and other operations and/or functions of various units of the second device 400 are respectively intended for implementing corresponding operations in the method illustrated in FIG. 3, which will not be elaborated again herein for the sake of brevity.

The communication device in embodiments of the disclosure has been described above from the perspective of functional modules with reference to the accompanying drawings. It should be understood that, the functional module may be implemented in the form of hardware, or may be implemented by an instruction in the form of software, or may be implemented by a combination of hardware and software module. Specifically, each step of the method embodiments of the disclosure may be completed by an integrated logic circuit of hardware in a processor and/or an instruction in the form of software. The steps of the method disclosed in embodiments of the disclosure may be directly implemented by a hardware decoding processor, or may be performed by hardware and software modules in the decoding processor. Optionally, the software module can be located in a storage medium such as a random access memory (RAM), a flash memory, a read only memory (ROM), a programmable ROM (PROM), or an electrically erasable programmable memory, registers, and the like. The storage medium is located in a memory. The processor reads the information in the memory, and completes the steps of the foregoing method embodiments with the hardware of the processor.

For example, the receiving unit 310 or the transmitting unit 410 described above may be implemented by a transceiver, and the controlling unit 320 described above may be implemented by a processor.

FIG. 14 is a schematic structural diagram of a communication device 500 according to embodiments of the disclosure.

As illustrated in FIG. 14, the communication device 500 may include a processor 510.

The processor 510 may invoke and execute computer programs from a memory, so as to implement the method in embodiments of the disclosure.

As illustrated in FIG. 14, the communication device 500 may further include a memory 520.

The memory 520 may be configured to store indication information, or store codes, instructions, etc. executable by the processor 510. The processor 510 can invoke and execute computer programs stored in the memory 520, to perform the method in embodiments of the disclosure. The memory 520 may be a separate device independent of the processor 510, or may be integrated into the processor 510.

As illustrated in FIG. 14, the communication device 500 may further include a transceiver 530.

The processor 510 can control the transceiver 530 to communicate with other devices, specifically, to transmit information or data to other devices or to receive information or data transmitted by other devices. The transceiver 530 may include a transmitter and a receiver. The transceiver 530 may further include an antenna, where one or more antennas can be provided.

It should be understood that, various components in the communication device 500 are connected together via a bus system. In addition to a data bus, the bus system may further include a power bus, a control bus, and a status signal bus.

It should also be understood that, the communication device 500 may be operable as the first device in embodiments of the disclosure, and the communication device 500 can implement the operations performed by the first device in various methods in embodiments of the disclosure. In other words, the communication device 500 in embodiments of the disclosure can correspond to the first device 300 in embodiments of the disclosure, and can correspond to a corresponding entity for implementing the method 200 according to embodiments of the disclosure, which will not be described again herein for the sake of brevity. Similarly, the communication device 500 may be operable as the second device in embodiments of the disclosure, and the communication device 500 can implement the operations performed by the second device in various methods in embodiments of the disclosure. In other words, the communication device 500 in embodiments of the disclosure can correspond to the second device 400 in embodiments of the disclosure, and can correspond to a corresponding entity for implementing the method 200 according to embodiments of the disclosure, which will not be described again herein for the sake of brevity.

In addition, embodiments of the disclosure further provide a chip.

For example, the chip may be an integrated circuit chip with signal processing capabilities, which can implement or execute various methods, steps, or logic blocks disclosed in embodiments of the disclosure. The chip may also be referred to as an SOC. Optionally, the chip is applicable to various communication devices, to cause a communication device equipped with the chip to perform various methods, steps, or logic blocks disclosed in embodiments of the disclosure.

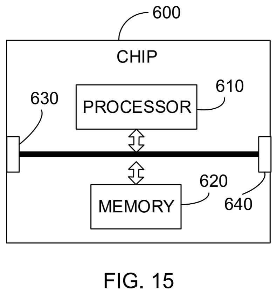

FIG. 15 is a schematic structural diagram of a chip 600 according to embodiments of the disclosure.

As illustrated in FIG. 15, the chip 600 includes a processor 610.

The processor 610 may invoke and execute computer programs from a memory, so as to implement the method in embodiments of the disclosure.

As illustrated in FIG. 15, the chip 600 may further include a memory 620.

The processor 610 can invoke and execute computer programs stored in the memory 620 to perform the method in embodiments of the disclosure. The memory 620 can be configured to store indication information, or store codes, instructions, etc. executable by the processor 610. The memory 620 may be a separate device independent of the processor 610, or may be integrated into the processor 610.

As illustrated in FIG. 15, the chip 600 may further include an input interface 630.

The processor 610 may control the input interface 630 to communicate with other devices or chips, and specifically, may obtain information or data transmitted by other devices or chips.

As illustrated in FIG. 15, the chip 600 may further include an output interface 640.

The processor 610 may control the output interface 640 to communicate with other devices or chips, and specifically, may output information or data to other devices or chips.

It should be understood that, the chip 600 may be applied to the first device or the second device in embodiments of the disclosure, that is, the chip may implement corresponding operations implemented by the first device in various methods in embodiments of the disclosure, or may implement corresponding operations implemented by the second device in various methods in embodiments of the disclosure, which will not be described again herein for the sake of brevity. It should also be understood that, various components in the chip 600 are connected together via a bus system. In addition to a data bus, the bus system may further include a power bus, a control bus, and a status signal bus.

The processor described above may include but is not limited to: a general-purpose processor, a digital signal processor (DSP), an ASIC, a field programmable gate array (FPGA), or other programmable logic devices, discrete gates or transistor logic devices, discrete hardware components, etc.

The processor can be configured to perform or execute the methods, steps, and logic blocks disclosed in embodiments of the disclosure. The steps of the method disclosed in embodiments of the disclosure may be directly implemented by a hardware decoding processor, or may be performed by hardware and software modules in the decoding processor. The software module can be located in a storage medium such as a RAM, a flash memory, a ROM, a PROM, or an erasable programmable memory, registers, and the like. The storage medium is located in the memory. The processor reads the information in the memory, and completes the steps of the method described above with the hardware of the processor.

The memory described above may include but is not limited to a volatile memory and/or a non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It should be noted that, the memory described in the disclosure is intended to include, but is not limited to, these and any other suitable types of memory.

Embodiments of the disclosure further provide a computer-readable storage medium. The computer-readable storage medium is configured to store computer programs. The computer-readable storage medium stores one or more programs. The one or more programs include instructions which, when executed by a portable electronic device including multiple application programs, are operable with the portable electronic device to perform the wireless communication method provided in the disclosure. Optionally, the computer-readable storage medium is applicable to the first device of embodiments of the disclosure. The computer programs are operable with a computer to implement the operations performed by the first device in various methods in embodiments of the disclosure, which will not be described again herein for the sake of brevity. Optionally, the computer-readable storage medium is applicable to the second device of embodiments of the disclosure. The computer programs are operable with a computer to implement the operations performed by the second device in various methods in embodiments of the disclosure, which will not be described again herein for the sake of brevity.

Embodiments of the disclosure further provide a computer program product. The computer program product includes computer programs. Optionally, the computer program product is applicable to the first device of embodiments of the disclosure. The computer programs are operable with a computer to implement the operations performed by the first device in various methods in embodiments of the disclosure, which will not be described again herein for the sake of brevity. Optionally, the computer program product is applicable to the second device of embodiments of the disclosure. The computer programs are operable with a computer to implement the operations performed by the second device in various methods in embodiments of the disclosure, which will not be described again herein for the sake of brevity.

Embodiments of the disclosure further provide a computer program. The computer program, when executed by a computer, is operable with the computer to perform wireless communication method provided in the disclosure. Optionally, the computer program is applicable to the first device of embodiments of the disclosure. The computer program, when executed by a computer, is operable with the computer to implement the operations performed by the first device in various methods in embodiments of the disclosure, which will not be described again herein for the sake of brevity. Optionally, the computer program is applicable to the second device of embodiments of the disclosure. The computer program, when executed by a computer, is operable with the computer to implement the operations performed by the second device in various methods in embodiments of the disclosure, which will not be described again herein for the sake of brevity.

In addition, embodiments of the disclosure further provide a communication system. The communication system may include the first device and the second device described above, to constitute the communication system 100 illustrated in FIG. 1, which will not be described again herein for the sake of brevity. It is to be noted that, the term "system" or the like in the disclosure may also be referred to as "network management architecture" or "network architecture", etc.

It should be also understood that, the terms used in embodiments of the disclosure and the appended claims are merely intended for describing the embodiments, rather than limiting embodiments of the disclosure. For example, the singular forms "a/an", "said", "the above", and "the" used in embodiments of the disclosure and the appended claims are also intended to include multiple forms, unless specified otherwise in the context.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure. If the functions are implemented as software functional units and sold or used as standalone products, they may be stored in a computer-readable storage medium. Based on such an understanding, the essential technical solution, or the portion that contributes to the related art, or part of the technical solution of the disclosure may be embodied as software products. The computer software products can be stored in a storage medium and may include multiple instructions that, when executed, can cause a computing device, e.g., a personal computer, a server, a network device, etc., to execute some or all operations of the methods described in embodiments of the disclosure. The above storage medium may include various kinds of media that can store program codes, such as a universal serial bus (USB) flash disk, a mobile hard drive, a ROM, a RAM, a magnetic disk, or an optical disk.

It will be evident to those skilled in the art that, for the sake of convenience and brevity, in terms of the specific working processes of the foregoing systems, apparatuses, and units, reference can be made to the corresponding processes in the foregoing method embodiments, which will not be described again herein. It will be appreciated that the systems, apparatuses, and methods disclosed in embodiments of the disclosure may also be implemented in various other manners. For example, the division of units, modules, or assemblies in the foregoing apparatus embodiments is only a division of logical functions, and other manners of division may be available in practice, e.g., multiple units, modules, or assemblies may be combined or may be integrated into another system, or some features may be ignored or skipped. Separated units/modules/assemblies as illustrated may or may not be physically separated, that is, may reside at one location or may be distributed to multiple networked units. Some or all of the units/modules/assemblies may be selectively adopted according to practical needs to achieve desired objectives of the disclosure. It is to be noted that, the coupling or direct coupling or communication connection as illustrated or discussed may be an indirect coupling or communication connection through some interface, device, or unit, and may be electrical, mechanical, or otherwise.

The following numbered clauses, describing aspects of the disclosure, are part of the description.
1. A wireless communication method, applied to a first device and comprising: receiving first indication information, wherein the first indication information indicates a start time and/or a duration of a first timer corresponding to a first measurement setup, and the start time and the duration of the first timer are used for controlling the first measurement setup.
2. The method of clause 1, wherein expiration of the first timer is used for triggering a second device to terminate the first measurement setup with the first device, and the expiration of the first timer comprises: a duration for which the first device does not participate in a measurement instance initiated by the second device is longer than or equal to the duration of the first timer.
3. The method of clause 1 or 2, wherein expiration of the first timer is used for triggering the first device to terminate the first measurement setup, and the expiration of the first timer comprises: a duration for which no measurement instance initiated by a second device is received by the first device is longer than or equal to the duration of the first timer.
4. The method of clause 3, further comprising: starting the first timer at the start time; and terminating the first measurement setup when the first timer expires.
5. The method of clause 3, further comprising: at a start time or an end time of receiving a measurement instance, restarting the first timer when the first timer is running and the first timer has not expired.
6. The method of clause 5, wherein at the start time or the end time of receiving the measurement instance, restarting the first timer when the first timer is running and the first timer has not expired comprises: at a start time or an end time of receiving a 1^{st} frame of the measurement instance, restarting the first timer when the first timer is running and the first timer has not expired.
7. The method of any of clauses 1 to 6, wherein receiving the first indication information comprises:
   receiving the first indication information during establishment of the first measurement setup.
8. The method of any of clauses 1 to 7, wherein the first measurement setup is used for periodic sensing measurement, and receiving the first indication information comprises: receiving a first measurement setup request frame, wherein the first measurement setup request frame contains scheduling information for a measurement instance, and the scheduling information comprises the first indication information.
9. The method of clause 8, wherein the scheduling information further comprises at least one of: a start time of a 1^{st} measurement instance, a first time interval between two consecutive measurement instances, the number of measurement instances corresponding to the first time interval, or a second time interval between two consecutive measurement instances, wherein a duration of the first time interval is shorter than a duration of the second time interval.
10. The method of any of clauses 1 to 9, further comprising: receiving a second measurement setup request frame, wherein the second measurement setup request frame is used for requesting establishment of a second measurement setup, and the second measurement setup is used for immediate sensing measurement.
11. The method of clause 10, wherein the second measurement setup request frame does not contain scheduling information for a measurement instance; or the second measurement setup request frame contains second indication information, wherein the second indication information indicates a start time and/or a duration of a second timer corresponding to the second measurement setup.
12. The method of any of clauses 1 to 11, wherein the start time of the first timer is a time after an establishment time of the first measurement setup.
13. The method of clause 12, wherein the start time of the first timer is a time of a 1^{st} measurement instance that the second device plans to initiate after the establishment time, and the first indication information indicates the time of the 1^{st} measurement instance.
14. The method of clause 12, wherein there is a first offset between the start time of the first timer and the establishment time, and the first indication information indicates the first offset.
15. The method of clause 12, wherein there is a second offset between the start time of the first timer and a time of a 1^{st} measurement instance that the second device plans to initiate after the establishment time, and the first indication information indicates the second offset.
16. The method of any of clauses 1 to 11, wherein the start time of the first timer is an establishment time of the first measurement setup.
17. The method of any of clauses 12 to 15, wherein the establishment time is a start time or an end time of receiving by the first device the first measurement setup request frame used for establishing the first measurement setup.
18. The method of any of clauses 1 to 17, wherein a duration between the start time of the first timer and the 1^{st} measurement instance is shorter than the duration of the first timer.
19. The method of any of clauses 1 to 18, wherein a duration between two adjacent measurement instances after the establishment time of the first measurement setup is shorter than the duration of the first timer.
20. The method of any of clauses 1 to 19, further comprising: after termination of the first measurement setup, establishing another measurement setup by using an identity (ID) different from at least one ID, wherein the at least one ID comprises a measurement setup ID used for a measurement instance that the second device participates in.
21. The method of any of clauses 1 to 20, further comprising: after termination of the first measurement setup, establishing a measurement setup identified by a first ID among the at least one ID by using the first ID, wherein the at least one ID comprises a measurement setup ID used for a measurement instance that the second device participates in.
22. The method of clause 20 or 21, wherein the at least one ID comprises an ID of the first measurement setup.
23. The method of any of clauses 1 to 22, wherein a sensing session established between the first device and the second device comprises a plurality of measurement setups, the plurality of measurement setups correspond to a plurality of timers, and a third timer is a timer having the maximum duration among the plurality of timers, wherein a start time and a duration of the third timer are used for controlling the sensing session.
24. The method of clause 23, wherein the plurality of measurement setups comprise a measurement setup for periodic sensing measurement and/or a measurement setup for immediate sensing measurement.
25. A wireless communication method, applied to a second device and comprising: transmitting first indication information, wherein the first indication information indicates a start time and/or a duration of a first timer corresponding to a first measurement setup, and the start time and the duration of the first timer are used for controlling the first measurement setup.
26. The method of clause 25, wherein expiration of the first timer is used for triggering a first device to terminate the first measurement setup, and the expiration of the first timer comprises: a duration for which no measurement instance initiated by the second device is received by the first device is longer than or equal to the duration of the first timer.
27. The method of clause 25 or 26, wherein expiration of the first timer is used for triggering the second device to terminate the first measurement setup with a first device, and the expiration of the first timer comprises: a duration for which the first device does not participate in a measurement instance initiated by the second device is longer than or equal to the duration of the first timer.
28. The method of clause 27, further comprising: starting the first timer at the start time; and terminating the first measurement setup with the first device when the first timer expires.
29. The method of clause 27, further comprising: at a start time or an end time of transmitting a measurement instance, restarting the first timer when the first timer is running and the first timer has not expired.
30. The method of clause 29, wherein at the start time or the end time of transmitting the measurement instance, restarting the first timer when the first timer is running and the first timer has not expired comprises: at a start time or an end time of transmitting a 1^{st} frame of the measurement instance, restarting the first timer when the first timer is running and the first timer has not expired
31. The method of any of clauses 25 to 30, wherein transmitting the first indication information comprises: transmitting the first indication information during establishment of the first measurement setup.
32. The method of any of clauses 25 to 31, wherein the first measurement setup is used for periodic sensing measurement, and transmitting the first indication information comprises: transmitting a first measurement setup request frame, wherein the first measurement setup request frame contains scheduling information for a measurement instance, and the scheduling information comprises the first indication information.
33. The method of clause 32, wherein the scheduling information further comprises at least one of: a start time of a 1^{st} measurement instance, a first time interval between two consecutive measurement instances, the number of measurement instances corresponding to the first time interval, or a second time interval between two consecutive measurement instances, wherein a duration of the first interval is shorter than a duration of of the second interval.
34. The method of any of clauses 25 to 33, further comprising: transmitting a second measurement setup request frame, wherein the second measurement setup request frame is used for requesting establishment of a second measurement setup, and the second measurement setup is used for immediate sensing measurement.
35. The method of clause 34, wherein the second measurement setup request frame does not contain scheduling information for a measurement instance; or the second measurement setup request frame contains second indication information, wherein the second indication information indicates a start time and/or a duration of a second timer corresponding to the second measurement setup.
36. The method of any of clauses 25 to 35, wherein the start time of the first timer is a time after an establishment time of the first measurement setup.
37. The method of clause 36, wherein the start time of the first timer is a time of a 1^{st} measurement instance that the second device plans to initiate after the establishment time, and the first indication information indicates the time of the 1^{st} measurement instance.
38. The method of clause 36, wherein there is a first offset between the start time of the first timer and the establishment time, and the first indication information indicates the first offset.
39. The method of clause 36, wherein there is a second offset between the start time of the first timer and a time of a 1^{st} measurement instance that the second device plans to initiate after the establishment time, and the first indication information indicates the second offset.
40. The method of any of clauses 25 to 35, wherein the start time of the first timer is an establishment time of the first measurement setup.
41. The method of any of clauses 36 to 40, wherein the establishment time is a start time or an end time of transmitting by the second device the first measurement setup request frame used for establishing the first measurement setup.
42. The method of any of clauses 25 to 41, wherein a duration between the start time of the first timer and the 1^{st} measurement instance is shorter than the duration of the first timer.
43. The method of any of clauses 25 to 42, wherein a duration between two adjacent measurement instances after the establishment time of the first measurement setup is shorter than the duration of the first timer.
44. The method of any of clauses 25 to 43, further comprising: after termination of the first measurement setup, establishing another measurement setup by using an identity (ID) different from at least one ID, wherein the at least one ID comprises a measurement setup ID used for a measurement instance that the second device participates in.
45. The method of any of clauses 24 to 44, further comprising: after termination of the first measurement setup, establishing a measurement setup identified by a first ID among the at least one ID by using the first ID, wherein the at least one ID comprises a measurement setup ID used for a measurement instance that the second device participates in.
46. The method of clause 44 or 45, wherein the at least one ID comprises an ID of the first measurement setup.
47. The method of any of clauses 24 to 46, wherein a sensing session established between the first device and the second device comprises a plurality of measurement setups, the plurality of measurement setups correspond to a plurality of timers, and a third timer is a timer having the maximum duration among the plurality of timers, wherein a start time and a duration of the third timer are used for controlling the sensing session.
48. The method of clause 47, wherein the plurality of measurement setups comprises a measurement setup for periodic sensing measurement and/or a measurement setup for immediate sensing measurement.
49. A first device, comprising: a receiving unit configured to receive first indication information, wherein the first indication information indicates a start time and/or a duration of a first timer corresponding to a first measurement setup, and the start time and the duration of the first timer are used for controlling the first measurement setup.
50. A second device, comprising: a transmitting unit configured to transmit first indication information, wherein the first indication information indicates a start time and/or a duration of a first timer corresponding to a first measurement setup, and the start time and the duration of the first timer are used for controlling the first measurement setup.
51. A first device, comprising: a memory configured to store computer programs; and a processor configured to invoke and execute the computer programs stored in the memory, to perform the method of any of clauses 1 to 24.
52. A second device, comprising: a memory configured to store computer programs; and a processor configured to invoke and execute the computer programs stored in the memory, to perform the method of any of clauses 25 to 46.
53. A chip, comprising: a processor configured to invoke and execute computer programs from a memory, to cause a device equipped with the chip to perform the method of any of clauses 1 to 24 or the method of any of clauses 25 to 46.
54. A computer-readable storage medium configured to store computer programs which are operable with a computer to perform the method of any of clauses 1 to 24 or the method of any of clauses 25 to 46.
55. A computer program product, comprising computer program instructions which are operable with a computer to perform the method of any of clauses 1 to 24 or the method of any of clauses 25 to 46.
56. A computer program, being operable a computer to perform the method of any of clauses 1 to 24 or the method of any of clauses 25 to 46.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method comprising:
receiving (S210), by a first device, first indication information, wherein the first indication information indicates a duration of a first timer corresponding to a first measurement setup which is established between the first device and a second device, wherein the duration of the first timer is used for controlling the first measurement setup;
starting, by the first device, the first timer according to a predefined start time; and
terminating, by the first device, the first measurement setup with expiration of the first timer;
wherein the first timer is in correspondence with a timer of a second device and the first measurement setup is terminated at the second device with expiration of the timer of the second device.

2. The method of claim 1, wherein the expiration of the timer of the second device comprises: a duration for which the first device does not participate in a measurement instance initiated by the second device is longer than or equal to the duration of the first timer.

3. The method of claim 1 or 2, wherein the expiration of the first timer comprises: a duration for which no measurement instance initiated by a second device is received by the first device is longer than or equal to the duration of the first timer.

4. The method of claim 1, the pre-defined start time of the first timer is the time when the first measurement setup is established.

5. The method of claim 3, further comprising:
at a start time or an end time of receiving a measurement instance, restarting the first timer when the first timer is running and the first timer has not expired.

6. The method of any of claims 1 to 5, wherein the first measurement setup is used for periodic sensing measurement, and receiving the first indication information comprises:
receiving a first measurement setup request frame, wherein the first measurement setup request frame contains scheduling information for a measurement instance, and the scheduling information comprises the first indication information,
wherein the scheduling information further comprises at least one of:
a start time of a 1^{st} measurement instance, a first time interval between two consecutive measurement instances, the number of measurement instances corresponding to the first time interval, or a second time interval between two consecutive measurement instances, wherein
a duration of the first time interval is shorter than a duration of the second time interval.

7. A wireless communication method, comprising:
transmitting (S210), by a second device, first indication information, wherein the first indication information indicates a duration of a timer corresponding to a first measurement setup which is established between a first device and a second device, wherein the duration of the timer is used for controlling the first measurement setup; and
starting, by the second device, the timer according to a predefined start time;
terminating, by the second device, the first measurement setup with expiration of the timer;
wherein the timer is in correspondence with a first timer of the first device and the first measurement setup is terminated at the first device with expiration of the first timer.

8. The method of claim 7, wherein the expiration of the first timer comprises: a duration for which no measurement instance initiated by the second device is received by the first device is longer than or equal to the duration of the first timer.

9. The method of claim 7 or 8, wherein the expiration of the timer comprises: a duration for which the first device does not participate in a measurement instance initiated by the second device is longer than or equal to the duration of the first timer.

10. The method of claim 7, wherein the pre-defined start time of the timer is the time when the first measurement setup is established.

11. The method of claim 9, further comprising:
at a start time or an end time of transmitting a measurement instance, restarting the timer when the timer is running and the first timer has not expired.

12. The method of any of claims 7 to 11, wherein the first measurement setup is used for periodic sensing measurement, and transmitting the first indication information comprises:
transmitting a first measurement setup request frame, wherein the first measurement setup request frame contains scheduling information for a measurement instance, and the scheduling information comprises the first indication information, wherein the scheduling information further comprises at least one of:
a start time of a 1^{st} measurement instance, a first time interval between two consecutive measurement instances, the number of measurement instances corresponding to the first time interval, or a second time interval between two consecutive measurement instances, wherein
a duration of the first interval is shorter than a duration of the second interval.

13. A first device (500), comprising:
a memory (520) configured to store computer programs; and
a processor (510) configured to invoke and execute the computer programs stored in the memory, to perform the method of any of claims 1 to 6.

14. A second device (500), comprising:
a memory (520) configured to store computer programs; and
a processor (510) configured to invoke and execute the computer programs stored in the memory, to perform the method of any of claims 7 to 12.
